# EUROPEAN PATENT APPLICATION

(11) **EP 4 714 984 A1**
(43) Date of publication of application: **25.03.2026**
(21) Application number: 24201358.9
(22) Date of filing: 19.09.2024
(51) Int. Cl.: C08F 2/48

(54) **DUAL CURE STRUCTURAL ADHESIVE COMPOSITION**

(71) Applicant: Henkel AG & Co. KGaA, 40589 Düsseldorf (DE)
(72) Inventor: Chen, Chunfu, Kanagawa Prefecture, 211-0067 (JP)

(57) **Abstract**

A composition comprising:
a) an ethylenically unsaturated monomer constituent comprising:
a1) at least one epoxy (meth)acrylate monomer, said monomer having at least one (meth)acrylate group and at least one epoxide group; and,
a2) at least one monomer which does not have an epoxide group and which has at least two ethylenically unsaturated groups and a weight average molecular weight (Mw) of at most 600 Daltons;

b) at least one ester peroxide in accordance with Formula P1, wherein R^{p} is C₁-C₁₂ alkyl, C₆-C₁₈ aryl, C₇-C₁₈ aralkyl or C₇-C₁₈ alkaryl;
c) at least one polyepoxide compound which does not possess a (meth)acrylate group; optionally d) at least one monoepoxide compound which does not possess a (meth)acrylate group;
e) a curing agent consisting of one or more compounds which provide at least one epoxide reactive group; and,
f) at least one cure accelerator,
wherein the composition is characterized in that the molar ratio of epoxide-reactive groups to epoxide groups is from 0.6:1 to 1.2:1.

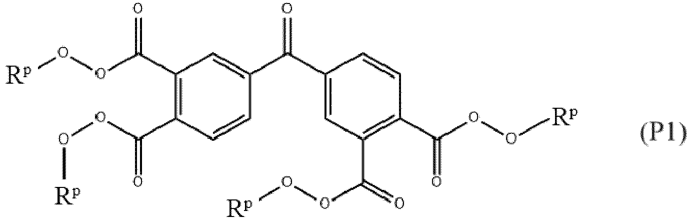

## Description

### FIELD OF THE INVENTION

The present disclosure is directed to a composition which is thermally curable and curable under actinic irradiation. More particularly, the present disclosure is directed to a composition which comprises an aromatic ester peroxide and both (meth)acrylate and epoxide functional compounds.

### BACKGROUND TO THE INVENTION

Compositions which are curable by actinic radiation may be cured relatively quickly by exposure to a radiation source, typically ultraviolet light. Such fast cure permits manufacturers to increase throughput when using those compositions for *inter alia* coating, sealant or adhesive applications or in forming composite structures.

Problematically, given that substrates to which such compositions may be applied can, in certain circumstances, possess either irregular or contoured surfaces, the compositions may suffer from a phenomenon whereby volumes of the composition which cannot easily be exposed to actinic radiation due to said irregularities or contours remain uncured. Similarly, where compositions are applied in laminar structures, curing actinic radiation may, in certain circumstances, be poorly transmitted through one or more substrates such that the compositions cannot be cured completely. Incomplete curing of compositions may promote issues such as corrosion, aging fatigue or peeling at the edges of bonded structures.

U.S. Patent No. 4,424,252 (Nativi) describes this problem of *"shadow cure"* and proposes the remedial use of dual cure resins. The described resins cure by two mechanisms: a) exposure to ultraviolet light; and, b) curing by atmospheric moisture. More particularly, atmospheric moisture reacts with free isocyanate groups in the dual cure resin to form an amine group, which group reacts with other isocyanate groups to form a polyurea.

Compositions based on dual-curing polyurethane resins typically possess a relatively high viscosity. This can be disadvantageous to the use of such compositions in conformal coatings where flowability around irregularities or contours of a substrate surface is required to achieve an even coating. Whilst reactive or non-reactive diluents may be added to dual-cure polyurethane compositions to lower their viscosity, this can be detrimental to the efficacy of the moisture cure mechanism thereof, which in turn results in a coating with insufficient hardness and / or solvent resistance in shadow areas.

Certain authors have proposed alternatives to dual cure resins based on polyurethane. For example, US Patent No. 4,605,465 A (Morgan) discloses a UV and thermally curable composition consisting of: i) a liquid, ethylenically unsaturated monomer, oligomer or prepolymer; ii) a thermal initiator for (i) selected from the group consisting of azo compounds, thiurams, organic peroxides and mixtures thereof; iii) a photoinitiator for (i) selected from the group consisting of aldehyde and ketone carbonyl compounds having at least one aromatic nucleus, benzoin alkyl ethers, diethoxyacetophenone and 2,2-dimethoxy-2-phenylacetophenone; iv) a thermoplastic material; and, v) a non-polymerizable plasticizer for (iv).

Further US Patent No. 10,174,146 B2 (Morin et al.) discloses a method which comprises: a) mixing at least one polymerizable acrylic compound, a thermal initiator, a photoinitiator, and a peroxide to form a mixture, wherein the peroxide has a decomposition temperature; b) exposing the mixture to light having a wavelength between 220 nm to 600 nm and an intensity of between 5 mW/cm² and 10 W/cm² for a sufficient first time to generate a first curing agent; and, c) after exposing the mixture to light, exposing the mixture to a temperature below the decomposition temperature of the peroxide for a sufficient second time to generate a second curing agent.

The compositions of these citations which are based on polymerizable acrylic compounds are complex, requiring a multiplicity of different initiating constituents in order to facilitate dual curing: this limits the formulation space of the composition which may be utilized to fine tune the compositional properties for particular applications. Further, it is considered that the compositions may not be facilely cured under either actinic irradiation or thermal treatment when applied independently.

### STATEMENT OF THE INVENTION

In accordance with a first aspect of the disclosure, there is provided a composition comprising:
a) an ethylenically unsaturated monomer constituent comprising:
   a1) at least one epoxy (meth)acrylate monomer, said monomer having at least one (meth)acrylate group and at least one epoxide group; and,
   a2) at least one monomer which does not have an epoxide group and which has at least two ethylenically unsaturated groups and a weight average molecular weight (Mw) of at most 600 Daltons;
b) at least one ester peroxide in accordance with Formula P1: 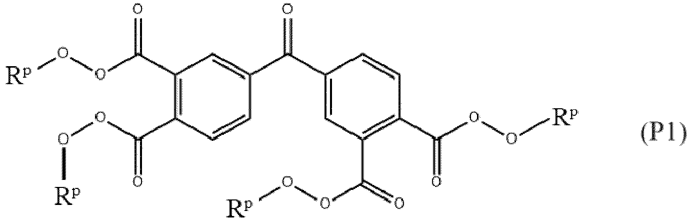 wherein: R^{p} is C₁-C₁₂ alkyl, C₆-C₁₈ aryl, C₇-C₁₈ aralkyl or C₇-C₁₈ alkaryl;
c) at least one polyepoxide compound which does not possess a (meth)acrylate group;
optionally d) at least one monoepoxide compound which does not possess a (meth)acrylate group; and,
e) a curing agent consisting of one or more compounds which provide at least one epoxide reactive group; and,
f) at least one cure accelerator,
wherein the composition is characterized in that the molar ratio of epoxide-reactive groups to epoxide groups is from 0.6:1 to 1.2:1.

The defined composition is curable upon exposure to actinic radiation. Equally, the composition may be cured under heating. In certain embodiments, the composition may be cured by the sequential steps of exposure to actinic radiation and heating, thereby enabling the curing of any fraction of the composition which has not received a curing dosage of actinic radiation.

In an important embodiment, the composition comprises, based on the weight of the composition:
from 10 to 80 wt.%, preferably from 20 to 70 wt.%, more preferably from 20 to 60 wt.% of a1) said at least one epoxy (meth)acrylate monomer, said monomer having at least one (meth)acrylate group and at least one epoxide group;
from 5 to 40 wt.%, preferably 5 to 25 wt.%, more preferably from 10 to 25 wt.% of a2) said at least one monomer which does not have an epoxide group and which has at least two ethylenically unsaturated groups and a weight average molecular weight (Mw) of at most 600 Daltons;
from 0.05 to 5 wt.%, preferably from 0.1 to 2 wt.%, more preferably from 0.1 to 1 wt.% of b) said at least one ester peroxide in accordance with Formula P1;
from 5 to 60 wt.%, preferably from 10 to 50 wt.%, more preferably from 10 to 40 wt.% of c) said at least one polyepoxide compound which does not possess a (meth)acrylate group;
from 0 to 5 wt.%, preferably from 0 to 3 wt.%, more preferably from 0 to 2 wt.% of d) said at least one monoepoxide compound which does not possess a (meth)acrylate group;
e) a curing agent consisting of one or more compounds which provide at least one epoxide reactive group; and,
from 0.1 to 10 wt.%, preferably from 0.1 to 5 wt.%, more preferably from 0.5 to 5 wt.% of f) said at least one cure accelerator,
wherein the composition is characterized in that the molar ratio of epoxide-reactive groups to epoxide groups is from 0.6:1 to 1.2:1, preferably from 0.7:1 to 1:1, more preferably from 0.75: 1 to 1:1.

In accordance with an important embodiment, the or each epoxy (meth)acrylate compound a1) is characterized by an equivalent weight of the total of epoxide and (meth)acrylate groups of from 100 to 700 g/eq, preferably from 120 to 320 g/eq.

Having regard to compounds in accordance with Formula P1, it is preferred that: R^{p} is C₁-C₁₂ alkyl, preferably C₃-C₈ alkyl. In important embodiments, constituent b) comprises or consists of at least one compound chosen from: 3,3',4,4'-tetrakis(t-butyl peroxycarbonyl)benzophenone; 3,3',4,4'- tetrakis(t-amyl peroxycarbonyl)benzophenone; 3,3',4,4'-tetrakis(t-hexyl peroxycarbonyl)benzophenone; 3,3',4,4'-tetrakis(t-octyl peroxycarbonyl)benzophenone; 3,3',4,4'-tetrakis(cumyl peroxycarbonyl)benzophenone; and, mixtures thereof. A particular preference may be noted for constituent b) comprising or consisting of 3,3',4,4'-tetrakis(t-butyl peroxycarbonyl)benzophenone.

Good results have been obtained where constituent c) comprises or consists of at least one polyglycidyl amine which includes in its structure one or more moieties conforming to:

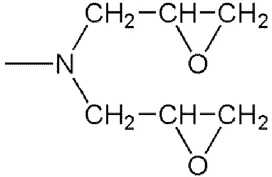

In certain embodiments of the composition, constituent c) comprises or consists of at least one polyglycidyl amine chosen from: N,N-diglycidyl aniline; N,N-diglycidyl-o-toluidine; N,N,O-triglycidyl-m-aminophenol; N,N,O-triglycidyl-p-aminophenol; N,N,O-triglycidyl-4-amino-3-methylphenol; N,N,N',N'-tetraglycidyl-4,4'-methylenebisbenzenamine *(N,N,N',N'-tetraglycidyl-4,4'-methylenedianiliney* N,N,N',N'-tetraglycidyl-2,2'-diethyl-4,4'-methylenedianiline; N,N,N',N'-tetraglycidyl-m-xylylenediamine; and, mixtures thereof.

In accordance with a second aspect of the present disclosure, there is provided a cured product obtained from the composition as defined herein above and in the appended claims. The present disclosure also provides for the use of said cured product as a coating, adhesive or sealant or as a matrix of a composite material.

In accordance with a still further aspect of the present disclosure, there is provided a method of curing a composition as defined hereinabove and in the appended claims, said method comprising:
i) exposing said composition to actinic radiation, preferably ultraviolet radiation having a wavelength of from 150 to 600 nm, more preferably ultraviolet radiation having a wavelength from 200 to 450 nm; and / or,
ii) heating said composition to a temperature of from 50°C to 250°C, preferably from 50°C to 200°C, more preferably from 100°C to 200°C.
In step i), it is preferred that said composition is exposed to actinic radiation at a dosage of from 5 to 5000 mJ/cm².

Where both step i) and step ii) are performed in this method, said steps may be performed simultaneously and / or independently of one another. The independent performance of these steps includes the sequential performance of these steps in any order.

Where the aspects of the disclosure are described above as having certain embodiments, any one or more of those embodiments can be implemented in or combined with any one of the further embodiments, even if that combination is not explicitly described. Expressed differently, the described embodiments are not mutually exclusive, and permutations thereof remain within the scope of this disclosure.

### DEFINITIONS

The terms *"comprising", "comprises"* and *"comprised* of" as used herein are synonymous with *"including", "includes", "containing"* or *"contains",* and are inclusive or open-ended and do not exclude additional, non-recited members, elements or method steps.

As used herein, the term *"consisting of'* excludes any element, ingredient, member or method step not specified. For completeness, the term *"comprising"* encompasses *"consisting of'.*

The words *"preferred", "preferably", "desirably"* and "*particularly*" are used frequently herein to refer to embodiments of the disclosure that may afford particular benefits, under certain circumstances. However, the recitation of one or more preferable, preferred, desirable or particular embodiments does not imply that other embodiments are not useful and is not intended to exclude those other embodiments from the scope of the disclosure.

The word *"exemplary"* is used herein to mean serving as an example, instance, or illustration. Any aspect or design described herein as *"exemplary"* is not necessarily to be construed as preferred or advantageous over other aspects or designs. Rather, use of the word exemplary is intended to present concepts in a concrete fashion.

As used throughout this application, the word "*may*" is used in a permissive sense - that is meaning to have the potential to - rather than in the mandatory sense.

The term *"plurality"* as used herein is defined as two or more than two.

The term *"fraction"* as used herein refers to a numerical quantity which defines a part up to but not including 100 percent or the entirety of the thing in question.

When amounts, concentrations, dimensions and other parameters are expressed in the form of a range, a preferable range, an upper limit value, a lower limit value or preferable upper and limit values, it should be understood that any ranges obtainable by combining any upper limit or preferable value with any lower limit or preferable value are also specifically disclosed, irrespective of whether the obtained ranges are clearly mentioned in the context.

Further, in accordance with standard understanding, a weight range represented as being *"from 0 to x"* specifically includes 0 wt.%: the ingredient defined by said range may be absent from the material or may be present in the material in an amount up to x wt.%.

As used herein, room temperature is 23°C plus or minus 2°C. As used herein, *"ambient conditions"* means the temperature and pressure of the surroundings in which the curable film is located or in which a coating layer or the substrate for said coating layer is located.

The term *"liquid"* herein means in a liquid state at room temperature and at atmospheric pressure. Analogously, the term *"solid"* means in a solid state at room temperature and at atmospheric pressure. Solid state is defined as the state of matter in which materials are not fluid but retain their boundaries without support, the atoms or molecules occupying fixed positions with respect to each other and unable to move freely.

The molecular weights referred to in this specification can be measured with gel permeation chromatography (GPC) using polystyrene calibration standards, such as is done according to ASTM 3536.

Viscosities of the coating compositions described herein are, unless otherwise stipulated, measured using the Brookfield Viscometer, Model RVT at standard conditions of 20°C and 50% Relative Humidity (RH). The viscometer is calibrated using silicone oils of known viscosities, which vary from 5,000 cps to 50,000 cps. A set of RV spindles that attach to the viscometer are used for the calibration. Measurements of the coating compositions are done using the No. 6 spindle at a speed of 20 revolutions per minute for 1 minute until the viscometer equilibrates. The viscosity corresponding to the equilibrium reading is then calculated using the calibration.

Where mentioned, a calculated glass transition temperature ("T_{g}") of a polymer or co-polymer is that temperature which may be calculated by using the Fox equation (T. G. Fox, Bull. Am. Physics Soc., Volume 1, Issue No. 3, page 123(1956)). The glass transition temperatures of certain homo-polymers may be found in the published literature, such as in *"*Polymer Handbook", edited by J. Brandrup and E. H. Immergut, Interscience Publishers.

The actual glass transition temperature (T_{g}) of a polymer can be determined by differential scanning calorimetry (DSC). The use of DSC to determine T_{g} is well known in the art, and is described by B. Cassel and M. P. DiVito in "Use of DSC To Obtain Accurate Thermodynamic and Kinetic Data", American Laboratory, January 1994, pp 14-19, and by B. Wunderlich in Thermal Analysis, Academic Press, Inc., 1990. The glass transition temperatures (T_{g}) specifically measured in the current patent application have been measured according to the methodology of Deutsches Institut für Normung (DIN) 11357.

The term *"softening point*" as used herein refers to the temperature at which a material, such as a polymer, loses its solid characteristics and becomes relatively fluid. A material's softening point as given herein is that temperature measured using the standard ball and ring method according to ISO 4625-1: 2004.

Unless otherwise stated, the term *"particle size"* refers to the largest axis of the particle. In the case of a generally spherical particle, the largest axis is the diameter.

The term *"median volume particle size" (Dv50),* as used herein, refers to a particle size corresponding to 50% of the volume of the sampled particles being greater than and 50% of the volume of the sampled particles being smaller than the recited Dv50 value. Particle size is determined herein by laser diffraction using Anton Paar Particle Size Analyzer (PSA) 1190.

Broadly, *"gel time"* describes the time at which a mixture is substantially incapable of flow: in molecular terms, gel time references the point at which an infinite network is formed. As used hereinafter, the quantified "*gel time"* means that time at which a viscosity of 75000 centipoise is attained, said gel time of the composition being determined by Gardner Standard Model Gel Timers at a temperature of 180°C and 50% Relative Humidity (RH).

As used herein, the term *"metallic"* may be used to denote pure metal, metal alloys or metal composites. As used herein, the term *"alloy"* refers to a substance composed of two or more metals or of a metal and a non-metal which have been intimately united, usually by being fused together and dissolved in each other when molten.

The term *"cure accelerator"* is intended herein to encompass any material which is a cure accelerator for the reactive functional compounds disclosed herein. The accelerator may be of either the catalytic or reactive type.

The term "*photoinitiator*" as used herein denotes a compound which can be activated by an energy-carrying activation beam - such as electromagnetic radiation - for instance upon irradiation therewith. The term is intended to encompass both photoacid generators and photobase generators. Specifically, the term "*photoacid generator*" refers to a compound or polymer which generates an acid for the catalysis of the acid hardening resin system upon exposure to actinic radiation. The term *"photobase generator*" means any material which when exposed to suitable radiation generates one or more bases.

The *"hydroxyl number*" as used herein refers to the number of milligrams of KOH having the same hydroxyl content as one gram of the polyol. The hydroxyl number is determined is determined in accordance with ASTM E222 *Standard Test Methods for Hydroxyl Groups Using Acetic Anhydride Acetylation.*

As used herein, the term *"equivalent (eq.")* relates, as is usual in chemical notation, to the relative number of reactive groups present in the reaction. The term *"equivalent weight'* as used herein refers to the molecular weight divided by the number of a function concerned. As such, *"epoxide equivalent weight"* (EEW) means the weight of resin, in grams, that contains one equivalent of epoxide. Equally, the *"amine hydrogen equivalent weight*" (AHEW) is the weight of the organic amine, in grams, that contains one amine hydrogen.

As used herein, an *"active hydrogen compound"* is a compound that has at least one active hydrogen functional group. Such a functional group includes at least one hydrogen atom that may be readily dissociated therefrom. Preferably, said hydrogen atom is attached to a nitrogen atom, an oxygen atom, a phosphorous atom, or a sulfur atom and, as such, exemplary active hydrogen functional groups are hydroxyl functional groups, amino functional groups and thiol functional groups.

As used herein, *"polyol"* refers to any compound comprising two or more hydroxyl groups: the term is thus intended to encompass diols, triols and compounds containing four or more -OH groups.

As used herein, the term *"epoxide"* denotes a compound characterized by the presence of at least one cyclic ether group, namely one wherein an ether oxygen atom is attached to two adjacent carbon atoms thereby forming a cyclic structure. The term is intended to encompass monoepoxide compounds, polyepoxide compounds having two or more epoxide groups, and epoxide terminated prepolymers. The term *"monoepoxide compound"* is meant to denote epoxide compounds having one epoxy group. The term *"polyepoxide compound"* is meant to denote epoxide compounds having at least two epoxy groups. The term *"diepoxide compound"* is meant to denote epoxide compounds having two epoxy groups.

The epoxide may be unsubstituted but may also be inertly substituted. Exemplary inert substituents include chlorine, bromine, fluorine and phenyl.

As used herein, the term *"monomer"* refers to a substance that can undergo a polymerization reaction to contribute constitutional units to the chemical structure of a polymer. The term "*monomer*" herein encompasses macromonomers which, in accordance with IUPAC Gold Book are polymeric or oligomeric molecules possessing at least one reactive functional group: the macromonomer participates in a polymerization reaction and contributes a single monomer unit to the chain of the product polymer.

The term *"ethylenically unsaturated monomer*" as used herein, refers to any monomer containing a terminal double bond capable of polymerization under normal conditions of free-radical addition polymerization.

As used herein, "*(meth)acryl*" is a shorthand term referring to "*acryl*" and/or "*methacryl*"*.* Thus the term *"(meth)acrylate"* refers collectively to acrylate and methacrylate.

As used herein, "*C₁-Cₙ alkyl"* group refers to a monovalent group that contains 1 to n carbons atoms, that is a radical of an alkane and includes straight-chain and branched organic groups. As such, a "*C₁-C₄ alkyl*" group refers to a monovalent group that contains from 1 to 4 carbons atoms, that is a radical of an alkane and includes straight-chain and branched organic groups. Examples of alkyl groups include, but are not limited to: methyl; ethyl; propyl; isopropyl; n-butyl; isobutyl; sec-butyl; and, tert-butyl. In the present invention, such alkyl groups may be unsubstituted or may be substituted with one or more halogen. Where applicable for a given moiety (R), a tolerance for one or more non-halogen substituents within an alkyl group will be noted in the specification.

The terms *"alkylene group"* refers to a divalent radical divalent radical formed by the removal of two hydrogen atoms from an alkyl group, which group may be substituted or unsubstituted and may optionally be interrupted by at least one heteroatom.

The term "*C₁-Cₙ hydroxyalkyl*" as used herein refers to an HO-(alkyl) group having from 1 to n carbon atoms, where the point of attachment of the substituent is through the oxygen-atom and the alkyl group is as defined above.

An *"alkoxy group"* refers to a monovalent group represented by -OA where A is an alkyl group: non-limiting examples thereof are a methoxy group, an ethoxy group and an iso-propyloxy group. The term *"alkoxylated"* as used herein means comprising at least one alkoxy group.

As used herein, "*C₂-C₆ alkenyl*" group refers to an aliphatic carbon group that contains 2 to 6 carbon atoms and at least one double bond disposed in any position. The alkenyl group can be straight chained, branched or cyclic and may optionally be substituted with one or more halogen. Where applicable for a given moiety (R), a tolerance for one or more non-halogen substituents within an alkenyl group will be noted in the specification. The term *"alkenyl"* also encompasses radicals having "cis" and "trans" configurations, or alternatively, "E" and "Z" configurations, as appreciated by those of ordinary skill in the art. In general, however, a preference for unsubstituted alkenyl groups containing from 2 to 6 (C₂-C₆) or from 2 to 4 (C₂-C₄) carbon atoms should be noted. And Examples of C₂-C₆ alkenyl groups include, but are not limited to: ethenyl; 1-propenyl; 2-propenyl; 1-methyl-ethenyl; 1-butenyl; 2-butenyl; 4-methylbutenyl; 1-pentenyl; 2-pentenyl; 3-pentenyl; 4-pentenyl; 4-methyl-3-pentenyl; 1-hexenyl; 3-hexenyl; and, 5-hexenyl.

The term "*C₃-C₆ cycloalkyl*" as used herein means an optionally substituted, saturated cyclic hydrocarbon having 3-6 carbon atoms. In the present invention, such cycloalkyl groups may be unsubstituted or may be substituted with one or more halogen. Where applicable for a given moiety (R), a tolerance for one or more non-halogen substituents within a cycloalkyl group will be noted in the specification. Exemplary cycloalkyl groups include cyclopropyl, cyclobutyl, cyclopentyl or cyclohexyl groups.

As used herein, "*C₃-C₆ cycloalkylene"* means a divalent radical formed by the removal of two hydrogen atoms from one or more rings of a cycloalkyl group having from 3 to 6 carbon atoms.

As used herein, "*C₂-C₁₈ alkenyl*" refers to hydrocarbyl groups having from 2 to 18 carbon atoms and at least one unit of ethylenic unsaturation. The alkenyl group can be straight chained, branched or cyclic and may optionally be substituted with one or more halogen. Where applicable for a given moiety (R), a tolerance for one or more non-halogen substituents within an alkenyl group will be noted in the specification. The term *"alkenyl"* also encompasses radicals having *"cis"* and *"trans"* configurations, or alternatively, "*E*" and "*Z*" configurations, as appreciated by those of ordinary skill in the art. Examples of said C₂-C₂₀ alkenyl groups include, but are not limited to: -CH=CH₂; -CH=CHCH₃; -CH₂CH=CH₂; -C(=CH₂)(CH₃); - CH=CHCH₂CH₃; -CH₂CH=CHCH₃; -CH₂CH₂CH=CH₂; - CH=C(CH₃)₂; -CH₂C(=CH₂)(CH₃); - C(=CH₂)CH₂CH₃; -C(CH₃)=CHCH₃; -C(CH₃)CH=CH₂; -CH=CHCH₂CH₂CH₃; -CH₂CH=CHCH₂CH₃; -CH₂CH₂CH=CHCH₃; -CH₂CH₂CH₂CH=CH₂; -C(=CH₂)CH₂CH₂CH₃; -C(CH₃)=CHCH₂CH₃; - CH(CH₃)CH=CHCH_{;} -CH(CH₃)CH₂CH=CH₂; -CH₂CH=C(CH₃)₂; 1-cyclopent-1-enyl; 1-cyclopent-2-enyl; 1-cyclopent-3-enyl; 1-cyclohex-1-enyl; 1-cyclohex-2-enyl; and, 1-cyclohexyl-3-enyl.

As used herein, an "*C₆-C₁₈ aryl*" group used alone or as part of a larger moiety - as in *"aralkyl group"* - refers to monocyclic, bicyclic and tricyclic ring systems in which the monocyclic ring system is aromatic or at least one of the rings in a bicyclic or tricyclic ring system is aromatic. The bicyclic and tricyclic ring systems include benzofused 2-3 membered carbocyclic rings. In the present disclosure, such aryl groups may be unsubstituted or may be substituted with one or more halogen. Where applicable for a given moiety (R), a tolerance for one or more non-halogen substituents within an aryl group will be noted in the specification. Exemplary aryl groups include: phenyl; (C₁-C₄)alkylphenyl, such as tolyl and ethylphenyl; indenyl; naphthalenyl, tetrahydronaphthyl, tetrahydroindenyl; tetrahydroanthracenyl; and, anthracenyl.

The term *"arylene" as* used herein refers to a divalent radical counterpart of an aryl group. Further, as used herein, *"alkylaryl"* refers to alkyl-substituted aryl groups as set forth above. Moreover, as used herein "*aralkyl*" means an alkyl group substituted with an aryl radical as defined above.

The term *"hetero"* as used herein refers to groups or moieties containing one or more heteroatoms, such as N, O, Si and S. Thus, for example *"heterocyclic"* refers to cyclic groups having, for example, N, O, Si or S as part of the ring structure. "*Heteroalkyl*", "*heterocycloalkyl*", *"heteroaryl"* and "*heteroalkylaryl*" moieties are alkyl, cycloalkyl and aryl groups as defined hereinabove, respectively, containing N, O, Si or S as part of their structure.

The term "*heterocyclyl*" refers to a monovalent chain of carbon and heteroatoms, wherein the heteroatoms are selected from N, O, Si or S, a portion of which, including at least one heteroatom, form a ring.

The term *"substituted"* refers to substitution with at least one suitable substituent. For completeness: the substituents may connect to the specified group or moiety at one or more positions; and, multiple degrees of substitution are allowed unless otherwise stated. Further, the terms *"substitution"* or *"substituted with"* include the implicit proviso that such substitution is in accordance with permitted valence of the substituted atom and the substituent, and that the substitution results in a stable compound that does not spontaneously undergo transformation by, for instance, rearrangement, cyclization or elimination.

The term *"substantially free"* is intended to mean that the constituent, component, compound, moiety, functional group, element, ion or the like is not deliberately added to the subject material and is present, at most, in only trace amounts which will have no (adverse) effect on the desired properties of the material. As regards compositions, an exemplary trace amount is less than 1000 ppm by weight of the composition. The term *"substantially free"* encompasses those embodiments where the specified compound, moiety, functional group, element, ion, or other like component is completely absent from the subject material or is not present in any amount measurable by techniques generally used in the art.

The term *"anhydrous"* as used herein has equivalence to the term *"substantially free of water*"*.* Water is not deliberately added to a given composition and is present, at most, in only trace amounts which will have no (adverse) effect on the desired properties of the composition.

### DETAILED DESCRIPTION OF THE INVENTION

### a) Ethylenically Unsaturated Monomers

The curable composition of present disclosure comprises ethylenically unsaturated monomers, the (co-)polymerization of which monomers yields the matrix of the cured composition. The ethylenically unsaturated monomer constituent of the composition is characterized in that it comprises: a1) at least one epoxy (meth)acrylate monomer, said monomer having at least one (meth)acrylate group and at least one epoxide group; and, a2) at least one monomer which does not have an epoxide group and which has at least two ethylenically unsaturated groups and a weight average molecular weight (Mw) of at most 600 Daltons. Further ethylenically unsaturated monomers - such as constituents a3) to a5) mentioned herein below - may optionally be present in the composition.

### a1) Epoxy (meth)acrylate compound

The present composition comprises a1) at least one epoxy (meth)acrylate compound, said monomer having at least one (meth)acrylate group and at least one epoxide group. It is preferred that the composition comprises, based on the weight of the composition, from 10 to 80 wt.%, preferably from 20 to 70 wt.% and more preferably from 20 to 60 wt.% of a1) said least one epoxy (meth)acrylate compound. The or each epoxy (meth)acrylate compound may preferably be characterized by an equivalent weight of the total of epoxide and (meth)acrylate groups of from 100 to 700 g/eq, for instance from 120 to 320 g/eq.

The epoxy (meth)acrylate compound is obtainable via the reaction of acrylic acid or methacrylic acid with a polyepoxide compound at stoichiometric ratio such that at least one (meth)acrylate group and at least one epoxide group are retained in the obtained adduct. An epoxy monomer with a desired (meth)acrylation proportion can be obtained by suitably changing the amounts of polyepoxide compound and (meth)acrylic acid to be reacted. For instance, the amount of (meth)acrylic acid to be reacted per equivalent of epoxide group should be from 0.1 to 0.7 equivalents.

Without intention to limit the present disclosure, suitable reactant polyepoxide compounds may be liquid, solid or in solution in solvent. Based on the above characterization, such reactant polyepoxide compounds should have an epoxide equivalent weight of from 100 to 700 g/eq, for example from 120 to 320 g/eq. And generally, diepoxide compounds having epoxide equivalent weights of less than 500 g/eq. or even less than 400 g/eq. are preferred: this is predominantly from a costs standpoint, as in their production, lower molecular weight epoxy resins require more limited processing in purification.

As examples of types or groups of polyepoxide compounds which may be reacted with (meth)acrylic acid, mention may be made of: polyglycidyl ethers of polyhydric alcohols and polyhydric phenols; polyglycidyl esters of polycarboxylic acids; and epoxidized polyethylenically unsaturated hydrocarbons.

The use of diepoxide compounds is preferred. For instance, suitable diglycidyl ether compounds may be aromatic, aliphatic or cycloaliphatic in nature and, as such, can be derivable from dihydric phenols and dihydric alcohols. And useful classes of such diglycidyl ethers are: diglycidyl ethers of aliphatic and cycloaliphatic diols, such as 1,2-ethanediol, 1,4-butanediol, 1,6-hexanediol, 1,8-octanediol, 1,12-dodecanediol, cyclopentane diol and cyclohexane diol; bisphenol A based diglycidylethers; bisphenol F diglycidyl ethers; diglycidyl o-phthalate, diglycidyl isophthalate and diglycidyl terephthalate; polyalkyleneglycol based diglycidyl ethers, in particular polypropyleneglycol diglycidyl ethers; and, polycarbonatediol based glycidyl ethers. Other suitable diepoxides which might also be mentioned include: diepoxides of double unsaturated fatty acid C₁-C₁₈ alkyl esters; butadiene diepoxide; polybutadiene diglycidyl ether; vinylcyclohexene diepoxide; and, limonene diepoxide.

Further illustrative polyepoxide compounds include but are not limited to: glycerol polyglycidyl ether; trimethylolpropane polyglycidyl ether; pentaerythritol polyglycidyl ether; diglycerol polyglycidyl ether; polyglycerol polyglycidyl ether; and, sorbitol polyglycidyl ether.

And examples of highly preferred reactant polyepoxide compounds include: diglycidyl ethers of cyclohexane diol; 1,2-epoxy-4-(epoxyethyl)cyclohexane; bisphenol-A epoxy resins; bisphenol-F epoxy resins; bisphenol-A/F epoxy resin blends; polypropylene glycol diglycidyl ethers, such as DER^{™} 732; epoxy novolac resins, such as DEN^{™} 438; brominated epoxy resins such as DER^{™} 542; castor oil triglycidyl ether, such as ERISYS^{™} GE-35H; polyglycerol-3-polyglycidyl ether, such as ERISYS^{™} GE-38; and, sorbitol glycidyl ether, such as ERISYS^{™} GE-60.

It will be noted that the polyepoxide compounds useful in forming the epoxy acrylate adducts may be monomeric or oligomeric. It is considered that the inclusion of monomeric epoxy (meth)acrylate monomers in the present polymer will generally yield a cured product having hard, abrasion-resistant characteristics. Conversely, the inclusion of oligomeric multifunctional (meth)acrylates will generally yield a slightly softer, but more flexible cured product. Of course, the use of both monomeric and oligomeric epoxy (meth)acrylate monomers might balance the desired properties of the cured product.

As will be recognized by the skilled artisan, the partial (meth)acrylation of the epoxide functional groups of a reactant polyepoxide is typically performed in the presence of a basic catalyst, of which mention may be made of triphenylphosphine (PPh₃), N,N'-dimethyltoluidine, pyridine, imidazole, triethylamine and tributylamine. The retention of such catalysts in the partially (meth)acrylated end-product can, however, be deleterious to the storage stability of that product. In order to prevent cross-linking reactions during storage - and the concomitant thickening and gelation of the product - the catalyst residue should desirably be removed from the epoxy (meth)arylate monomer before it is used in the formation of the copolymer. Illustrative methods for removing residual catalyst are disclosed *inter alia* in: WO2011/078113; JP-Hei-5-332031; JP-Hei-11-012345; JP 2002-145984 A; JP 2004-244543; JP 2013-103950; and, JP2019-052273A.

In an alternative embodiment, a polymerization inhibitor - such as a quinone or quinone methide - might be added to the partially (meth)acrylated reaction product prior to its storage. However, this is not necessarily preferred as such inhibitors constitute an impurity which would be present in the polymerization reaction yielding the matrix copolymer.

The above aside, suitable epoxy (meth)arylate compounds having at least one (meth)acrylate group and at least one epoxide group may be obtained from commercial sources. Representative commercial epoxy (meth)arylate monomers include but are not limited to: glycidyl methacrylate (GMA) available from Sigma Aldrich; Uvacure^{®} 1561 and Uvacure^{®} 1562 available from Daicel-Allnex Ltd.; and, HCT-1 available from Henkel Corporation; Synas S-100 (3,4-epoxycyclohexyl methyl methacrylate) available from Synasia.

### a2) Monomers having at least two ethylenically unsaturated groups

In certain embodiments, the composition of the present disclosure comprises from 5 to 40 wt.%, based on the weight of the composition, of a2) at least one monomer having at least two ethylenically unsaturated groups and having a weight average molecular weight (Mw) of at most 600 Daltons. For example, the composition may comprise from 5 to 25 wt.% or from 10 to 25 wt.%, based on the weight of the composition, of a2) said at least one monomer having at least two ethylenically unsaturated groups and having a weight average molecular weight (Mw) of at most 600 Daltons. The monomers of constituent a2) do not possess epoxide groups.

Exemplary monomers of constituent a2), which may be used alone or in combination, include: conjugated dienes, such as butadiene and isoprene; allyl compounds, including such as allyl (meth)acrylate, diallyl phthalate, diallyl itaconate, diallyl fumarate and diallyl maleate; polyallyl ethers of polyols, including polyallyl ethers of trimethylolpropane, pentaerythritol and sucrose; poly(meth)acrylates of alkane polyols; poly(meth)acrylates of oxyalkane polyols; and, poly(C₂-C₄)alkylene glycol di(meth)acrylates. For instance, compounds having utility herein, either alone or in combination, include: 1 ,2-ethanediol dimethacrylate; 1,2-propanediol di(meth)acrylate; 1,3-propanediol di(meth)acrylate; 1,3-butanediol di(meth)acrylate; 1,4-butanediol di(meth)acrylate; 2,2-dimethylpropane-1,3-diol di(meth)acrylate; 1,6-hexanediol di(meth)acrylate; 3-methyl-1,5-pentanediol di(meth)acrylate; 1,10-decanediol diacrylate; diethylene glycol di(meth)acrylate; dipropylene glycol di(meth)acrylate; triethylene glycol di(meth)acrylate; tetraethylene glycol di(meth)acrylate; dibutylene glycol di(meth)acrylate; di(pentamethylene glycol)dimethacrylate; and, tricyclodecanedimethanol di(meth)acrylate.

Further exemplary compounds having two (meth)acrylate groups include compounds in accordance with Formula DA:

H₂C=C(R^{m})-C(O)O-(RⁿO)ₚ-O(O)C-C(R^{m})=CH₂ (DA)

wherein:
each R^{m} is independently H or CH₃;
each Rⁿ is independently C₂-C₄ alkylene; and,
p is an integer of from 1 to 8.

It is preferred that: each R^{m} is independently H or CH₃, preferably H; each Rⁿ is independently ethylene or propylene; and, p is an integer of from 1 to 5 or from 2 to 4.

Exemplary compounds in accordance with Formula DA, which may be used alone or in combination, include but are not limited to: tetraethylene glycol di(meth)acrylate; triethylene glycol di(meth)acrylate; tripropylene glycol di(meth)acrylate; and, dipropylene glycol di(meth)acrylate.

Tri(meth)acrylate compounds having utility in constituent a2) include the tri(meth)acrylates of trihydric polyols. The tri(meth)acrylates of alkoxylated trihydric polyols may be used, in particular the tri(meth)acrylates of ethoxylated, propoxylated and / or butoxylated trihydric polyols. Exemplary trifunctional (meth)acrylate compounds included but are not limited to: trimethylolpropane tri(meth)acrylate; penta erythritol tri(meth)acrylate; ethoxylated trimethylolpropane tri(meth)acrylate; propoxylated trimethylolpropane tri(meth)acrylate; ethoxylated trimethylolpropane tri(meth)acrylate; and, propoxylated glyceryl tri(meth)acrylate. In certain embodiments, trimethylolpropane triacrylate (TMPTA) and / or pentaerythritol triacrylate (PETIA) may be used.

Further (meth)acrylate compounds having utility in constituent a2) include but are not limited to: di(trimethylolpropane) tetracrylate; pentaerythritol tetracrylate; and, di-trimethylolpropane tetraacrylate (Di-TMPTTA); and, dipentaerythritol pentaacrylate (Di-PEPA).

### a3) Aliphatic and Cycloaliphatic (Meth)acrylate Monomers

Based on the weight of the composition, the composition of the present disclosure may comprise from 0 to 25 wt.%, for example from 0 to 20 wt.%, of a3) at least one (meth)acrylate monomer represented by Formula III:

H₂C=CGCO₂R¹ (III)

wherein:
G is hydrogen, halogen or C₁ alkyl; and,
R¹ is: C₁-C₃₀ alkyl; C₁-C₁₈ hydroxyalkyl; C₂-C₃₀ heteroalkyl; C₃-C₃₀ cycloalkyl; or, C₂-C₈ heterocycloalkyl.

For example, R¹ may be: C₁-C₁₈ alkyl, C₁-C₁₂ hydroxyalkyl; C₂-C₁₈ heteroalkyl, C₃-C₁₈ cycloalkyl; or, C₂-C₈ heterocycloalkyl. Desirably, said monomer(s) a3) are characterized in that R¹ is C₁-C₁₈ alkyl, C₁-C₆ hydroxyalkyl or C₃-C₁₈ cycloalkyl.

Examples of (meth)acrylate monomers a3) in accordance with Formula (III) include but are not limited to: methyl (meth)acrylate; ethyl (meth)acrylate; butyl (meth)acrylate; hexyl (meth)acrylate; 2-ethylhexyl (meth)acrylate; dodecyl (meth)acrylate; lauryl (meth)acrylate; cyclohexyl (meth)acrylate; isobornyl (meth)acrylate; 2-hydroxyethyl (meth)acrylate (HEMA); 2-hydroxypropyl (meth)acrylate; ethylene glycol monomethyl ether (meth)acrylate; ethylene glycol monoethyl ether (meth)acrylate; ethylene glycol monododecyl ether (meth)acrylate; diethylene glycol monomethyl ether (meth)acrylate; trifluoroethyl (meth)acrylate; and, perfluorooctyl (meth)acrylate.

### a4) Aromatic (Meth)acrylate Monomers

Based on the weight of the composition, the composition of the present disclosure may comprise from 0 to 25 wt.%, for example from 0 to 20 wt.%, of a4) at least one (meth)acrylate monomer represented by Formula IV:

H₂C=CQCO₂R² (IV)

wherein:
Q is hydrogen, halogen or C₁ alkyl; and,
R² is C₆-C₁₈ aryl, C₁-C₉ heteroaryl, C₇-C₁₈ alkylaryl, C₇-C₁₈ heteroalkylaryl or C₇-C₁₈ aralkyl.

Exemplary (meth)acrylate monomers a4) in accordance with Formula (IV) - which may be used alone or in combination - include but are not limited to: benzyl (meth)acrylate; phenoxyethyl (meth)acrylate; phenoxydiethylene glycol (meth)acrylate; phenoxypropyl (meth)acrylate; and, phenoxydipropylene glycol (meth)acrylate.

### a5) Further Ethylenically Unsaturated Monomers

The composition may comprise further ethylenically unsaturated monomers not conforming to the definitions of a1), a2), a3) and a4). It is preferred however that the composition comprises at most 20 wt.%, for instance at most 15 wt.% or at most 10 wt.% of a5) said further ethylenically unsaturated monomers, based on the weight of the composition.

Operable further (meth)acrylate monomers include those that possess certain additional, non-polymerizing functionalities which can improve the surface adhesion of polymers derived therefrom. Mention in this regard may be made of anhydride, urethane, phosphate or phosphonate functionalities and (meth)acrylate monomers bearing such functionalities may be used in the present composition. A listing of such phosphorus compounds is found in US Patent No. 4,223,115. Exemplary monomers include: 2-mono methacryloxyethyl phosphate; bis(2-methacryloxyethyl) phosphate; 2-acryloyloxyethyl phosphate; bis-(2-acryloyloxyethyl) phosphate; methyl-(2-methacryloyloxyethyl) phosphate; ethyl methacryloyloxyethyl phosphate; methyl acryloyloxyethyl phosphate; ethyl acryloyloxyethyl phosphate; 2-hydroxyethylmethacrylate phosphate; 10-[(2-methylprop-2-enoyl)oxy]decyl dihydrogen phosphate (10-*methacryloyloxydecyl dihydrogen phosphate);* and, 4-methacryloxyethyl trimellitic anhydride. The use of 2-methacryloxyethyl phenyl urethane (MAPU) might also be mentioned.

The composition may, in certain circumstances, further comprise co-polymerizable acid. It is considered that the co-polymerizable acid might improve the cure speed and, where applicable, metal adhesion of the composition. For completeness, whilst such monomers should typically be used in the form of free acid, it is not precluded that the constituent acid groups of the monomers be partially or completely neutralized with suitable bases, provided this does not compromise their participation in co-polymerization.

Without intention to limit the present disclosure, co-polymerizable acid monomers should be selected from the group consisting of: ethylenically unsaturated carboxylic acids; ethylenically unsaturated sulfonic acids; vinylphosphonic acid; and, mixtures thereof. Suitable ethylenically unsaturated sulfonic acids are, for instance, vinylsulfonic acid, styrenesulfonic acid and acrylamidomethylpropanesulfonic acid.

Preferably the co-polymerizable acid of this part comprises or consists of ethylenically unsaturated carboxylic acids selected from the group consisting of: α,β-monoethylenically unsaturated monocarboxylic acids; α,β-monoethylenically unsaturated dicarboxylic acids; C₁-C₆ alkyl half-esters of α,β-monoethylenically unsaturated dicarboxylic acids; α,β-monoethylenically unsaturated tricarboxylic acids; and, C₁-C₆ alkyl esters of α,β-monoethylenically unsaturated tricarboxylic acids bearing at least one free carboxylic acid group; and, mixtures thereof. In particular, the co-polymerizable acid of this part comprises or consists of at least one acid selected from the group consisting of: methacrylic acid; acrylic acid; itaconic acid; maleic acid; aconitic acid; crotonic acid; and, fumaric acid.

The present disclosure also does not preclude the presence of allylic monomers which can be copolymerized with (meth)acrylate monomers. Mention in this regard may be made of: prop-2-en-1-ol *(allyl alcohol*); 3-chloroprop-1-ene (*allyl chloride*)*;* diallyl ortho-phthalate; diallyl terephthalate, diethylene glycol diallyl carbonate; triallyl cyanurate; triallyl trimesate; and, triallyl isocyanurate. However, when included, such allylic co-monomers should constitute less than 25 wt.%, based on the total weight of ethylenically unsaturated monomers.

The present disclosure also does not preclude the presence of vinyl monomers which can be copolymerized with (meth)acrylate monomers and which are selected from the group consisting of: styrene monomers, such as styrene, vinyltoluene, α-methylstyrene and chlorostyrene; fluorine containing vinyl monomers, such as perfluoroethylene, perfluoropropylene and fluorinated vinylidene; silicon containing vinyl monomers such as vinyltrimethoxysilane and vinyltriethoxysilane; maleimide monomers, such as maleimide, methylmaleimide, ethylmaleimide, propylmaleimide, butylmaleimide, hexylmaleimide, octylmaleimide, dodecylmaleimide, stearylmaleimide, phenylmaleimide and cyclohexylmaleimide; nitrile group containing vinyl monomers, such as acrylonitrile and methacrylonitrile; amide group containing vinyl monomers, such as acrylamide and methacrylamide; vinyl esters such as vinyl acetate, vinyl propionate, vinyl pivalate, vinyl benzoate and vinyl cinnamate; alkenes such as ethylene and propylene; conjugated dienes such as butadiene and isoprene; and vinyl chloride and vinylidene chloride. However, when included, such vinyl co-monomers should constitute less than 10 wt.%, preferably less than 5 wt.%, based on the total weight of ethylenically unsaturated monomers.

### b) Ester Peroxide Compound

The compositions of the present invention typically include from 0.05 to 5 wt.%, for instance from 0.1 to 2 wt.% or from 0.1 to 1 wt.%, based on the weight of the composition, of b) at least one ester peroxide in accordance with Formula P1: 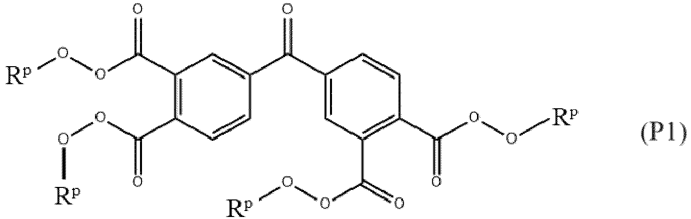 wherein: R^{p} is C₁-C₁₂ alkyl, C₆-C₁₈ aryl, C₇-C₁₈ aralkyl or C₇-C₁₈ alkaryl. In important embodiments of Formula P1, R^{p} is C₁-C₁₂ alkyl or more preferably C₃-C₈ alkyl.

Exemplary ester peroxides in accordance with Formula P1, which may have utility in the present composition either alone or in combination, include: 3,3',4,4'-tetrakis(t-butyl peroxycarbonyl)benzophenone; 3,3',4,4'- tetrakis(t-amyl peroxycarbonyl)benzophenone; 3,3',4,4'-tetrakis(t-hexyl peroxycarbonyl)benzophenone; 3,3',4,4'-tetrakis(t-octyl peroxycarbonyl)benzophenone; and, 3,3',4,4'- tetrakis(cumyl peroxycarbonyl)benzophenone. A particular preference for the use of 3,3',4,4'- tetrakis(t-butyl peroxycarbonyl)benzophenone (*3,3',4,4'-tetra(t-butyl peroxycarbonate) benzophenone,* CAS77473-08-6*)* may be mentioned.

The ester peroxide of Formula P1 initiates the polymerization or hardening of the compositions upon either irradiation with actinic radiation or upon heating. Expressed differently, the active species which initiates the cure reactions of the present disclosure may be generated from the ester peroxides under irradiation or under heating. It will be noted however, that where irradiation is employed to generate the active species, the cure chemistry is subject to the same rules of thermodynamics as any chemical reaction: the reaction rate may be accelerated by heat; the practice of using thermal treatments to enhance the actinic-radiation cure of monomers is generally known in the art.

It is not precluded that the compositions of the disclosure may include further photoinitiator compounds to the aforementioned ester peroxide, which photoinitiator compound(s) would initiate the polymerization or hardening of the compositions upon irradiation with actinic radiation. Given that the compositions contain compounds possessing free-radically active, unsaturated groups - in particular (meth)acrylate compounds and epoxy-functional (meth)acrylate compounds - the preferred further photoinitiators would be photoactive compounds that undergo a Norrish I cleavage to generate free radicals that can initiate by addition to the acrylic double bonds.

It is preferred however that any further photoinitiator(s) should be present in the composition *in toto* in an amount of from 0 to 25 wt.%, based on the weight of said constituent b).

As would be recognized by the skilled artisan, photosensitizers can be incorporated into the compositions to improve the efficiency with which compounds of Formula P1 and any further photo-initiators present use the photonic energy delivered. The term "*photosensitizer*" is used in accordance with its standard meaning to represent any substance that either increases the rate of photoinitiated polymerization or shifts the wavelength at which polymerization occurs. Photosensitizers should be used in an amount of from 0 to 25 wt.%, based on the weight of said constituent b).

The use of the compounds of Formula P1 and, optionally photosensitizers and further photo-initiators, may produce residue compounds from the (photo)chemical reaction in the final cured product. The residues may be detected by conventional analytical techniques such as: infrared, ultraviolet and NMR spectroscopy; gas or liquid chromatography; and, mass spectroscopy. Thus, the present disclosure may comprise cured matrix (co-)polymers and detectable amounts of residues from compound(s) of constituent b) and residues from any photosensitizers present. The residues are present in small amounts and do not normally interfere with the desired physiochemical properties of the final cured product.

### c) Polyepoxide Compounds

The composition of the present disclosure comprises c) at least one polyepoxide compound which does not possess a (meth)acrylate group. For instance, the composition may comprise from 5 to 60 wt.%, for example from 10 to 50 wt.% or from 10 to 40 wt.% of c) said at least one polyepoxide compound, based on the weight of the composition.

Constituent c) may be constituted by a single polyepoxide compound but equally may be mixtures of polyepoxide compounds, including mixtures of compounds having different numbers of epoxide groups per molecule. A polyepoxide compound may be saturated or unsaturated, aliphatic, cycloaliphatic, aromatic or heterocyclic and may be substituted. Further, the polyepoxide compound may also be monomeric or polymeric.

Without intention to limit the present disclosure, suitable polyepoxide compounds may be liquid, solid or in solution in solvent. Further, such polyepoxide compounds should have an epoxide equivalent weight of from 100 to 700 g/eq, for example from 120 to 320 g/eq. And generally, polyepoxide compounds having epoxide equivalent weights of less than 500 g/eq. or even less than 400 g/eq. are preferred: this is predominantly from a costs standpoint, as in their production, lower molecular weight epoxy resins require more limited processing in purification.

As examples of types or groups of polyepoxide compounds which may be reacted in the present disclosure, mention may be made of: glycidyl ethers of polyhydric alcohols and polyhydric phenols; glycidyl esters of polycarboxylic acids; epoxidized polyethylenically unsaturated hydrocarbons; and, glycidyl amine epoxy resins.

Suitable diglycidyl ether compounds may be aromatic, aliphatic or cycloaliphatic in nature and, as such, can be derivable from dihydric phenols and dihydric alcohols. And useful classes of such diglycidyl ethers are: diglycidyl ethers of aliphatic and cycloaliphatic diols, such as 1,2-ethanediol, 1,4-butanediol, 1,6-hexanediol, 1,8-octanediol, 1,12-dodecanediol, cyclopentane diol and cyclohexane diol; bisphenol A based diglycidylethers; bisphenol F diglycidyl ethers; diglycidyl o-phthalate, diglycidyl isophthalate and diglycidyl terephthalate; polyalkyleneglycol based diglycidyl ethers, in particular polypropyleneglycol diglycidyl ethers; and, polycarbonatediol based glycidyl ethers. Other suitable diepoxides which might also be mentioned include: diepoxides of double unsaturated fatty acid C₁-C₁₈ alkyl esters; butadiene diepoxide; polybutadiene diglycidyl ether; vinylcyclohexene diepoxide; and, limonene diepoxide.

Further illustrative polyepoxide compounds include but are not limited to: glycerol polyglycidyl ether; trimethylolpropane polyglycidyl ether; pentaerythritol polyglycidyl ether; diglycerol polyglycidyl ether; polyglycerol polyglycidyl ether; and, sorbitol polyglycidyl ether.

And examples of polyepoxide compounds include: bisphenol-A epoxy resins, such as DER^{™} 331, DER^{™} 330, DER^{™} 337 and DER^{™} 383; bisphenol-F epoxy resins, such as DER^{™} 354; bisphenol-A/F epoxy resin blends, such as DER^{™} 353; aliphatic glycidyl ethers, such as DER^{™} 736; polypropylene glycol diglycidyl ethers, such as DER^{™} 732; solid bisphenol-A epoxy resins, such as DER^{™} 661 and DER^{™} 664 UE; solutions of bisphenol-A solid epoxy resins, such as DER^{™} 671-X75; epoxy novolac resins, such as DEN^{™} 438; brominated epoxy resins such as DER^{™} 542; castor oil triglycidyl ether, such as ERISYS^{™} GE-35H; polyglycerol-3-polyglycidyl ether, such as ERISYS^{™} GE-38; and, sorbitol glycidyl ether, such as ERISYS^{™} GE-60.

In an important embodiment, constituent c) of the composition comprises or consists of at least one glycidyl amine epoxy resin. As used herein, a glycidyl amine epoxy resin is an epoxy resin which has at least one glycidyl group bonded directly to the nitrogen atom; for use in constituent c), the glycidyl amine must contain more than one epoxide group. In particular, constituent c) of the composition may comprise or consist of at least one polyglycidyl amine which includes in its structure one or more moieties conforming to:

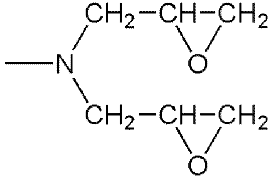

Exemplary glycidyl amine epoxy resins include: N,N-diglycidyl aniline; N,N-diglycidyl-o-toluidine; N,N,O-triglycidyl-m-aminophenol; N,N,O-triglycidyl-p-aminophenol; N,N,0-triglycidyl-4-amino-3-methylphenol; N,N,N',N'-tetraglycidyl-4,4'-methylenebisbenzenamine *(N,N,N',N'-tetraglycidyl-4,4'-methylenedianiline);* N,N,N',N'-tetraglycidyl-2,2'-diethyl-4,4'-methylenedianiline; and, N,N,N',N'-tetraglycidyl-m-xylylenediamine.

Exemplary commercially available glycidyl amine epoxy resins having utility in constituent c) either alone or in combination include: Sumiepoxy ELM434, available from Sumitomo Chemical; Araldite^{®} MY720, Araldite^{®} MY721, Araldite MY9512, Araldite^{®} MY9612, Araldite^{®} MY9634 and Araldite^{®} MY9663, available from Huntsman Advanced Materials; and, Epicoat 604, available from Japan Epoxy Resin Co., Ltd.

### d) Monoepoxide Compound

The composition of the present disclosure may, in certain circumstances, comprise d) at least one monoepoxide compound. For instance, the composition may comprise up to 5 wt.%, for example up to 3 wt.% of said monoepoxide compound, based on the weight of the composition. The monoepoxide compound is desirably characterized by a viscosity of at less than 750 cP at 25°C, for example a viscosity of less than 600 cP or less than 500 cP as determined at 25°C.

Without intention to limit the present invention, illustrative monoepoxide compounds, which may be used alone or in combination, include: alkylene oxides; epoxy-substituted cycloaliphatic hydrocarbons, such as cyclohexene oxide, cyclooctene oxide, cyclododecene oxide, vinylcyclohexene monoxide, (+)-cis-limonene oxide, (+)-cis,trans-limonene oxide, (-)-cis,trans-limonene oxide, and α-pinene oxide; epoxy-substituted aromatic hydrocarbons; monoepoxy substituted alkyl ethers of monohydric alcohols or phenols, such as the glycidyl ethers of aliphatic, cycloaliphatic and aromatic alcohols; monoepoxy-substituted alkyl esters of monocarboxylic acids, such as glycidyl esters of aliphatic, cycloaliphatic and aromatic monocarboxylic acids, such as the glycidyl ester of Versatic^{®} acid; monoepoxy-substituted alkyl esters of polycarboxylic acids wherein the other carboxy group(s) are esterified with alkanols; alkyl and alkenyl esters of epoxy-substituted monocarboxylic acids; epoxyalkyl ethers of polyhydric alcohols wherein the other OH group(s) are esterified or etherified with carboxylic acids or alcohols; and, monoesters of polyhydric alcohols and epoxy monocarboxylic acids, wherein the other OH group(s) are esterified or etherified with carboxylic acids or alcohols.

By way of example, the following glycidyl ethers might be mentioned as being particularly suitable monofunctional epoxy diluents for use herein: methyl glycidyl ether; ethyl glycidyl ether; propyl glycidyl ether; butyl glycidyl ether; pentyl glycidyl ether; hexyl glycidyl ether; cyclohexyl glycidyl ether; octyl glycidyl ether; 2-ethylhexyl glycidyl ether; allyl glycidyl ether; benzyl glycidyl ether; phenyl glycidyl ether; 4-tert-butylphenyl glycidyl ether; 1-naphthyl glycidyl ether; 2-naphthyl glycidyl ether; 2-chlorophenyl glycidyl ether; 4-chlorophenyl glycidyl ether; 4-bromophenyl glycidyl ether; 2,4,6-trichlorophenyl glycidyl ether; 2,4,6-tribromophenyl glycidyl ether; pentafluorophenyl glycidyl ether; o-cresyl glycidyl ether; m-cresyl glycidyl ether; and, p-cresyl glycidyl ether. A preference for aliphatic monoglycidyl ethers containing C₄-₁₄ alkyl chains might be noted.

In an embodiment, the monoepoxide compound conforms to Formula (ME) herein below: 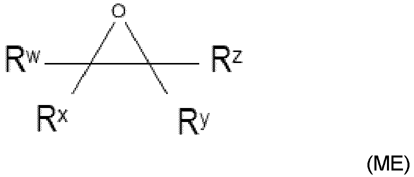 wherein: R^{w}, R^{x}, R^{y} and R^{z} may be the same or different and are independently selected from hydrogen, a halogen atom, a C₁-C₂₈ alkyl group, a C₃ to C₁₀ cycloalkyl group, a C₂-C₁₂ alkenyl, a C₆-C₁₈ aryl group or a C₇-C₁₈ aralkyl group, with the proviso that at least one of R^{y} and R^{z} is not hydrogen.

It is preferred that R^{w}, R^{x} and R^{y} are hydrogen and R^{z} is either a phenyl group or a C₁-C₂₀ alkyl group and, more preferably, a C₁-C₁₈ alkyl group. For example, R^{z} may be C₄ to C₁₈ or a C₈-C₁₆ alkyl group.

Having regard to this embodiment, exemplary monoepoxides include: ethylene oxide; 1,2-propylene oxide (propylene oxide); 1,2-butylene oxide; cis-2,3-epoxybutane; trans-2,3-epoxybutane; 1,2-epoxypentane; 1,2-epoxyhexane; 1,2-1,2-epoxyheptane; 1,2-epoxydecane; 1,2-epoxydodecane; 1,2-epoxytetradecane; 1,2-epoxyhexadecane; 1,2-epoxyoctadecane; 1,2-epoxyeicosane; butadiene oxide; isoprene oxide (*3,4-epoxy-2-methyl-1-butene*); and, styrene oxide (*phenylethylene oxide*);. Exemplary commercial monoepoxides for use herein include the Vikolox^{®} series of 1,2-epoxyalkanes available from Arkema, in particular Vikolox^{®} 10, Vikolox^{®}12, Vikolox^{®}14, Vikolox^{®}16, Vikolox^{®}18, Vikolox^{®}20, Vikolox^{®}11-14, Vikolox^{®}15-18, Vikolox^{®}20-24 and Vikolox^{®}24-28.

The above aside, the composition can in certain embodiments comprise epoxide-functional alkoxy silanes having the formula (ES):

E-(CH₂)ₙ-Si(R^{s})ₘ(OR^{t})₃₋ₘ (ES)

wherein:
E is 2,3-epoxypropoxy, epoxycyclohexyl or epoxycyclopentyl;
n is from 1-10;
m is 0, 1 or 2;
each R^{s} is independently C₁-C₃ alkyl; and,
each R^{t} is independently C₁-C₃ alkyl.

In preferred embodiments: E is 2,3-epoxypropoxy; n is from 1 to 8; m is 0 or 1; R^{s}, when present, is methyl or ethyl; and, each R^{t} is independently methyl or ethyl.

Exemplary silanes, which may be used alone or in combination, include but are not limited to: 2-(3,4-epoxycyclohexyl)ethyltrimethoxysilane; 3-glycidoxypropyl methyldimethoxysilane; γ-glycidoxy propyl trimethoxy silane; γ-glycidoxy ethyl trimethoxy silane; γ-glycidoxymethyl trimethoxy silane; γ-glycidoxy methyl triethoxy silane; 3-glycidoxypropyl methyldiethoxysilane; γ-glycidoxy ethyl triethoxy silane; γ-glycidoxy propyl triethoxy silane; and, 8-glycidooxyoctyl trimethoxysilane. The use of γ-glycidoxy propyl trimethoxy silane may be mentioned in particular.

When present, the epoxide functional alkoxysilanes should constitute less than 60 wt.%, preferably less than 55 wt.% or less than 50 wt.%, based on the total weight of epoxide functional compounds in the composition.

The present disclosure also does not preclude the curable compositions from further comprising one or more cyclic monomers selected from the group consisting of: oxetanes; cyclic carbonates; cyclic anhydrides; and, lactones. The disclosures of the following citations may be instructive in disclosing suitable cyclic carbonate functional compounds: US Patent No. 3,535,342; US Patent No. 4,835,289; US Patent No. 4,892,954; UK Patent No. GB-A-1,485,925; and, EP-A-0 119 840. However, such cyclic co-monomers should constitute less than 20 wt.%, preferably less than 10 wt.% or less than 5 wt.%, based on the total weight of epoxide functional compounds in the composition.

### e) Curing Agent

The present disclosure provides for the presence in the composition of a curing agent consisting of one or more compounds which provide at least one epoxide reactive group. There is no particular intention to limit the curing agent which may have utility in the present composition. For instance, the curing agent may comprise or consist of one or more compounds which have at least two epoxide reactive groups per molecule. Equally, the curing agent may comprise or consist of latent curatives, including photo-latent curatives. Combinations of reactive and latent curatives are envisaged within the context of the present disclosure.

That aside, the amount of curing agent present in the composition should broadly be sufficient to effect the complete cure of the epoxide compound(s). More particularly, the amount of curing agent present in the composition should be such that composition is characterized by a molar ratio of epoxide-reactive groups to epoxide groups from 0.6:1 to 1.2: 1, for example from 0.6: 1 to 1.1: 1, from 0.7:1 to 1:1 or from 0.75: 1 to 1:1. Notably, the molar ratio of epoxide-reactive groups to epoxide groups of 1:1 is included within these stated ranges. A highly preferred molar ratio of epoxide-reactive groups to epoxide groups provides for an excess of epoxide reactive groups and is from 0.75:1 to 0.95:1. For surety: the term epoxide reactive groups includes latent reactive groups which are therefore included in the molar ratio term.

In an supplementary expression of the composition's constituency, it is preferred that the composition comprises from 0.1 to 10 wt.% of said curing agent for said epoxide compound(s), based on the weight of the composition. Preferably said composition comprises from 0.1 to 5 wt.%, for example from 0.5 to 5 wt.% of said curing agent.

Reactive curing agents may, in particular, include one or more of: i) at least one polyamine having at least two amine hydrogens reactive toward epoxide groups; ii) at least one mercapto compound having at least two mercapto groups reactive toward epoxide groups; and, iii) at least one Mannich base.

The at least one polyamine having at least two amine hydrogens reactive toward epoxide groups should, in particular, contain primary and / or secondary amine groups and have an amine hydrogen equivalent weight (AHEWj of not more than 150 g/eq., more preferably not more than 125 g/eq.

Suitable polyamines, which may be used alone or in combination, include but are not limited to the following:
i) Aliphatic, cycloaliphatic or arylaliphatic primary diamines of which the following examples may be mentioned: 2,2-dimethyl-1,3-propanediamine; 1,3-pentanediamine (DAMP); 1,5-pentanediamine; 1,5-diamino-2-methylpentane (MPMD); 2-butyl-2-ethyl-1,5-pentanediamine (C11-neodiamine); 1,6-hexanediamine (hexamethylenediamine, HMDA); 2,5-dimethyl-1,6-hexanediamine; 2,2,4- and / or 2,4,4-trimethylhexamethylenediamine; 1,7-heptanediamine; 1,8-octanediamine; 1,9-nonanediamine; 1,10-decanediamine; 1,11-undecanediamine; 1,12-dodecanediamine; 1,2-, 1,3- and 1,4-diaminocyclohexane; bis(4-aminocyclohexyl)methane; bis(4-amino-3-methylcyclohexyl)methane; bis(4-amino-3-ethylcyclohexyl)methane; bis(4-amino-3,5-dimethylcyclohexyl)methane; bis(4-amino-3-ethyl-5-methylcyclohexyl)methane; 1-amino-3-aminomethyl-3,5,5-trimethylcyclohexane (isophorone diamine, IPDA); 2- and / or 4-methyl-1,3-diaminocyclohexane; 1,3-bis(aminomethyl)-cyclohexane; 1,4-bis(aminomethyl)cyclohexane; 2,5(2,6)-bis(aminomethyl)-bicyclo[2.2.1]heptane (norborane diamine, NBDA); 3(4),8(9)-bis(aminomethyl)tricyclo[5.2.1.0^{2,6}]-decane (TCD-diamine); 1,4-diamino-2,2,6-trimethylcyclohexane (TMCDA); 1,8-menthanediamine; 3,9-bis(3-aminopropyl)-2,4,8,10-tetraoxaspiro[5.5]undecane; and, 1,3-bis(aminomethyl)benzene (MXDA).
ii) Tertiary amine group-containing polyamines with two or three primary aliphatic amine groups of which the following specific examples may be mentioned: N,N'-bis(aminopropyl)-piperazine; N,N-bis(3-aminopropyl)methylamine; N,N-bis(3-aminopropyl)ethylamine; N,N-bis(3-aminopropyl)propylamine; N,N-bis(3-aminopropyl)cyclohexylamine; N,N-bis(3-aminopropyl)-2-ethyl-hexylamine; tris(2-aminoethyl)amine; tris(2-aminopropyl)amine; tris(3-aminopropyl)amine; and, the products from the double cyanoethylation and subsequent reduction of fatty amines derived from natural fatty acids, such as N,N-bis(3-aminopropyl)dodecylamine and N,N-bis(3-aminopropyl)tallow alkylamine, commercially available as Triameen^{®} Y12D and Triameen^{®} YT (from Akzo Nobel).
iii) Ether group-containing aliphatic primary polyamines of which the following specific examples may be mentioned: bis(2-aminoethyl)ether; 3,6-dioxaoctane-1,8-diamine; 4,7-dioxadecane-1,10-diamine; 4,7-dioxadecane-2,9-diamine; 4,9-dioxadodecane-1,12-diamine; 5,8-dioxadodecane-3,10-diamine; 4,7,10-trioxatridecane-1,13-diamine and higher oligomers of these diamines; bis(3-aminopropyl)polytetrahydrofuranes and other polytetrahydrofuran diamines; cycloaliphatic ether group-containing diamines obtained from the propoxylation and subsequent amination of 1,4-dimethylolcyclohexane, such as that material commercially available as Jeffamine^{®} RFD-270 (from Huntsman); polyoxyalkylenedi- or -triamines obtainable as products from the amination of polyoxyalkylenedi- and -triols and which are commercially available under the name of Jeffamine^{®} (from Huntsman), under the name of polyetheramine (from BASF) or under the name of PC Amines^{®} (from Nitroil). A particular preference may be noted for the use of Jeffamine^{®} D-230, Jeffamine^{®} D-400, Jeffamine^{®} D-600, Jeffamine^{®} D-2000, Jeffamine^{®} D-4000, Jeffamine^{®} T-403, Jeffamine^{®} T-3000, Jeffamine^{®} T-5000, Jeffamine^{®} EDR-104, Jeffamine^{®} EDR-148 and Jeffamine^{®} EDR-176, as well as corresponding amines from BASF or Nitroil.
iv) Primary diamines with secondary amine groups of which the following examples may be mentioned: 3-(2-aminoethyl)aminopropylamine, bis(hexamethylene)triamine (BHMT); diethylenetriamine (DETA); triethylenetetramine (TETA); tetraethylenepentamine (TEPA); pentaethylenehexamine (PEHA); higher homologs of linear polyethyleneamines, such as polyethylene polyamines with 5 to 7 ethyleneamine units (so-called "higher ethylenepolyamine," HEPA); products from the multiple cyanoethylation or cyanobutylation and subsequent hydrogenation of primary di- and polyamines with at least two primary amine groups, such as dipropylenetriamine (DPTA), N-(2-aminoethyl)-1,3-propanediamine (N3-amine), N,N'-bis(3-aminopropyl)ethylenediamine (N4-amine), N,N'-bis(3-aminopropyl)-1,4-diaminobutane, N5-(3-aminopropyl)-2-methyl-1,5-pentanediamine, N3-(3-aminopentyl)-1,3-pentanediamine, N5-(3-amino-1-ethylpropyl)-2-methyl-1,5-pentanediamine or N,N'-bis(3-amino-1-ethylpropyl)-2-methyl-1,5-pentanediamine.
v) Polyamines with one primary and at least one secondary amino group of which the following examples may be mentioned: N-butyl-1,2-ethanediamine; N-hexyl-1,2-ethanediamine; N-(2-ethylhexyl)-1,2-ethanediamine; N-cyclohexyl-1,2-ethanediamine; 4-aminomethyl-piperidine; N-(2-aminoethyl)piperazine; N-methyl-1,3-propanediamine; N-butyl-1,3-propanediamine; N-(2-ethylhexyl)-1,3-propanediamine; N-cyclohexyl-1,3-propanediamine; 3-methylamino-1-pentylamine; 3-ethylamino-1-pentylamine; 3-cyclohexylamino-1-pentylamine; fatty diamines such as N-cocoalkyl-1,3-propanediamine; products from the Michael-type addition reaction of primary aliphatic diamines with acrylonitrile, maleic or fumaric acid diesters, citraconic acid diesters, acrylic and methacrylic acid esters, acrylic and methacrylic acid amides and itaconic acid diesters, reacted in a 1:1 molar ratio; products from the partial reductive alkylation of primary polyamines with aldehydes or ketones, especially N-monoalkylation products of the previously mentioned polyamines with two primary amine groups and in particular of 1,6-hexanediamine, 1,5-diamino-2-methylpentane, 1,3-bis(aminomethyl)cyclohexane, 1,4-bis(aminomethyl)cyclohexane, 1,3-bis(aminomethyl)benzene, BHMT, DETA, TETA, TEPA, DPTA, N3-amine and N4-amine, wherein preferred alkyl groups are benzyl, isobutyl, hexyl and 2-ethylhexyl; and, partially styrenated polyamines such as those commercially available as Gaskamine^{®} 240 (from Mitsubishi Gas Chemical).
vi) Secondary diamines and, in particular, N,N'-dialkylation products of the previously mentioned polyamines with two primary amine groups, especially N,N'-dialkylation products of 1 ,6-hexanediamine, 1,5-diamino-2-methylpentane, 1,3-bis(aminomethyl)cyclohexane, 1,4-bis(aminomethyl)-cyclohexane, 1,3-bis(aminomethyl)benzene, BHMT, DETA, TETA, TEPA, DPTA, N3-amine or N4-amine, wherein preferred alkyl groups are 2-phenylethyl, benzyl, isobutyl, hexyl and 2-ethylhexyl.
vii) Aromatic polyamines of which mention may be made of: m- and p-phenylenediamine; 4,4'-, 2,4' and 2,2'-diaminodiphenylmethane; 3,3'-dichloro-4,4'-diaminodiphenylmethane (MOCA); 2,4- and 2,6-tolylenediamine; mixtures of 3,5-dimethylthio-2,4- and -2,6-tolylenediamine (available as Ethacure^{®} 300 from Albermarle); mixtures of 3,5-diethyl-2,4- and -2,6-tolylene diamine (DETDA); 3,3',5,5'-tetraethyl-4,4'-diaminodiphenylmethane (M-DEA); 3,3',5,5'-tetraethyl-2,2'-dichloro-4,4'-diaminodiphenylmethane (M-CDEA); 3,3'-diisopropyl-5,5'-dimethyl-4,4'-diaminodiphenylmethane (M-MIPA); 3,3',5,5'-tetraisopropyl-4,4'-diaminodiphenylmethane (M-DIPA); 4,4'-diamino diphenyl-sulfone (DDS); 4-amino-N-(4-aminophenyl)benzenesulfonamide; 5,5'-methylenedianthranilic acid; dimethyl-(5,5'-methylenedianthranilate); 1,3-propylene-bis(4-aminobenzoate); 1,4-butylene-bis(4-aminobenzoate); polytetramethylene oxide-bis(4-aminobenzoate) (available as Versalink^{®} from Air Products); 1,2-bis(2-aminophenylthio)ethane, 2-methylpropyl-(4-chloro-3,5-diaminobenzoate); and, tert.butyl-(4-chloro-3,5-diaminobenzoate).
viii) Polyamidoamines of which indicative members include the reaction products of monohydric or polyhydric carboxylic acids or the esters or anhydrides thereof, - in particular dimer fatty acids - and an aliphatic, cycloaliphatic or aromatic polyamine, for instance polyalkyleneamines such as DETA or TETA. Commercially available polyamidoamines include: Versamid^{®} 100, 125, 140 and 150 (from Cognis); Aradur^{®} 223, 250 and 848 (from Huntsman); Euretek^{®} 3607 and 530 (from Huntsman); and, Beckopox^{®} EH 651, EH 654, EH 655, EH 661 and EH 663 (from Cytec).

Exemplary compounds among the aforementioned polyamines having at least two primary aliphatic amine groups are: isophorone diamine (IPDA); hexamethylene diamine (HMDA); 1,3-bis(aminomethyl)cyclohexane; 1,4-bis(aminomethyl)cyclohexane; bis(4-amino-cyclohexyl)methane; bis(4-amino-3-methylcyclohexyl)methane; NBDA; and, ether group-containing polyamines with a number average molecular weight (Mn) of up to 500 g/mol of which commercial examples include Jeffamine^{®} D-230 and D-600 (available from Huntsman).

As noted above, the composition of the present disclosure may optionally comprise - as the curing agent - at least one compound which has at least two reactive mercapto-groups per molecule. Suitable mercapto-group containing compounds, which may be used alone or in combination, include but are not limited to the following:
- Mercaptan-terminated polyoxyalkylene ethers, obtainable by reacting polyoxyalkylenedi- and -triols either with epichlorohydrin or with an alkylene oxide, followed by sodium hydrogen sulfide.
- Mercaptan-terminated compounds in the form of polyoxyalkylene derivatives, known under the trade name of Capcure^{®} (from Cognis), in particular the types WR-8, LOF and 3-800 thereof.
- Polyesters of thiocarboxylic acids of which particular examples include: pentaerythritol tetramercapto-acetate (PETMP); trimethylolpropane trimercaptoacetate (TMPMP); glycol dimercaptoacetate; and, the esterification products of polyoxyalkylene diols and triols, ethoxylated trimethylolpropane and polyester diols with thiocarboxylic acids such as thioglycolic acid and 2- or 3-mercaptopropionic acid.
- 2,4,6-trimercapto-1,3,5-triazine, 2,2'-(ethylenedioxy)-diethanethiol (triethylene glycol dimercaptan) and / or ethanedithiol.
- Tris(2-(mercaptopropionyloxy)ethyl)isocyanate.

A preference is acknowledged for the use of polyesters of thiocarboxylic acids and, in particular, for the use of at least one of pentaerythritol tetramercapto-acetate (PETMP), tris-(3-mercaptopropionate) (TMP), trimethylolpropane trimercaptoacetate (TMPMP), tris(2-(mercaptopropionyloxy)ethyl)isocyanate and glycol dimercaptoacetate.

As noted above, a reactive curative may comprise at least one Mannich base. Such compounds may be characterized by containing at least one phenalkamine and, in particular, a phenalkamine obtained from the condensation of cardanol (CAS Number: 37330-39-5), an aldehyde and an amine. The reactant amine in the condensation reaction is desirably ethylenediamine or diethyltriamine.

Mannich bases and phenalkamines are known in the art and suitable examples include the commercially available phenalkamines Cardolite^{®} NC-541, NC-557, NC-558, NC-566, Lite 2001 and Lite 2002 (available from Cardolite), Aradur^{®} 3440, 3441, 3442 and 3460 (available from Huntsman) and Beckopox^{®} EH 614, EH 621, EH 624, EH 628 and EH 629 (available from Cytec).

Any common latent epoxy curing agents used in the art can be used in the present disclosure without special limitations. For example, suitable latent epoxy curing agents which may be used herein are described in: US Patent No. 4,546,155; US Patent No. 7,226,976; US Patent No. 4,833,226; JP2008214567; UK Patent No. GB 1,121,196; WO2014/165423; and, US Patent No. 5,077,376. Further, examples of commercially available latent epoxy curing agents include Ajicure PN-23, PN-40, PN-H, MY-24 and PN-50 commercially available from Ajinomoto Co., Inc.; EH-4337S, EH-3293S and EH-4357S commercially available from Asahi Denka Co. Ltd.; Novacure HX-3722 and HXA-3921 HP commercially available from Asahi Kasei Kogyo. K.K.; and, Sunmide LH-210, Ancamin 2014AS/FG and Ancamin 2337S commercially available from Air Products and Chemicals, Inc.

In accordance with the important embodiment, constituent e) comprises or consists of dicyandiamide. When employed, it is preferred that said dicyandiamide is in finely divided form: a median volume particle size (Dv50) of from 0.5 to 100 µm, for example from 1 to 50 µm or from 2 to 20 µm might be noted as desirable. Said particle size refers to the diameter or largest dimension of a particle in a distribution of particles and is measureable via laser diffraction.

Further exemplary latent epoxy curing agents include but are not limited: ketimines obtainable by the reaction of aliphatic polyamines and ketones; polyethyleneimines, in particular polyethyleneimines having a weight average molecular weight (Mw) from 700 to 1,000,000 g/mol.; imidazole derivatives such as 2-heptadeoylimidazole, 2-phenyl-4,5-dihydroxymethylimidazole, 2-phenyl-4-methyl-5-hydroxymethylimidazole, 2-phenyl-4-benzyl-5-hydroxymethyl-imidazole; 2,4-diamino-8-2-methylimidazolyl-(1)-ethyl-5-triazine; addition products of triazine with isocyanuric acid; hydrazides such as succinohydrazide, adipohydrazide, isophtholohydrazide o-oxybenzohydrazide and salicylohydrazide.

### f) Accelerator

The composition of the present disclosure comprises f) at least one cure accelerator. In particular, the composition may comprise, based on the weight of the composition, from 0.1 to 10 wt.%, preferably from 0.1 to 5 wt.% and more preferably from 0.5 to 5 wt.% of f) said at least one cure accelerator.

Suitable cure accelerators include substances that promote the reaction between the epoxide groups and the epoxide-reactive groups, for instance the reaction between the amine groups and the epoxide groups. Mention in this regard may be made of the following suitable accelerators: i) acids or compounds hydrolyzable to acids, in particular a) organic carboxylic acids, such as acetic acid, benzoic acid, salicylic acid, 2-nitrobenzoic acid and lactic acid; b) organic sulfonic acids, such as methanesulfonic acid, p-toluenesulfonic acid and 4-dodecylbenzenesulfonic acid; c) sulfonic acid esters; d) inorganic acids, such as phosphoric acid; e) Lewis acid compounds, such as BF₃ amine complexes, SbF₆ sulfonium compounds, bis-arene iron complexes; f) Bronsted acid compounds, such as pentafluoroantimonic acid complexes; and, e) mixtures of the aforementioned acids and acid esters; ii) tertiary amines, such as 1,4-diazabicyclo[2.2.2]octane, benzyldimethylamine, α-methylbenzyl dimethylamine, triethanolamine, dimethylamino propylamine, imidazoles - including N-methylimidazole, N-vinylimidazole and 1,2-dimethylimidazole - and salts of such tertiary amines; iii) quaternary ammonium salts, such as benzyltrimethyl ammonium chloride; iv) amidines, such as 1,8-diazabicyclo[5.4.0]undec-7-ene; v) guanidines, such as 1,1,3,3-tetramethylguanidine; vi) phenols, in particular bisphenols; vii) phenol resins; viii) Mannich bases; and, ix) phosphites, such as di- and triphenylphosphites.

In accordance with an interesting embodiment, the cure accelerator f) comprises or consists of at least one urea derivative of Formula (V) or Formula (VI): 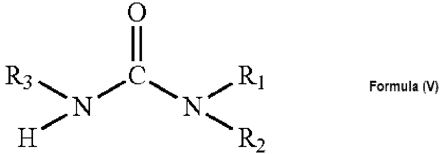 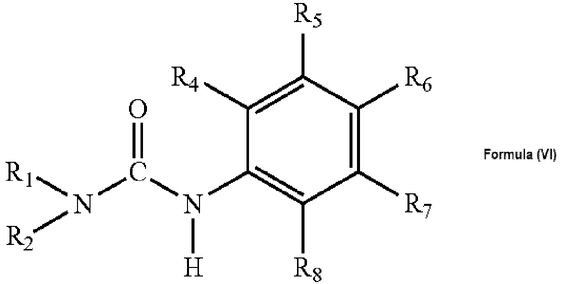 wherein:
at least one residue R¹, R², R³ is not hydrogen;
R¹ and R² are independently selected from hydrogen, C₁-C₁₈ alkyl and C₃-C₁₈ cycloalkyl;
R³ is hydrogen, C₁-C₁₈ alkyl, C₃-C₁₈ cycloalkyl, C₆-C₁₈ aryl, C₆-C₁₈ aralkyl, C₆-C₁₈-alkylaryl, C₁-C₁₈ alkyl substituted with -NHC(O)NR¹R², C₃-C₁₈ cycloalkyl substituted with - NHC(O)NR¹R², C₆-C₁₈ aryl substituted with -NHC(O)NR¹R²; C₆-C₁₈ aralkyl substituted with - NHC(O)NR¹R²; and, C₆-C₁₈ aralkyl substituted with -NHC(O)NR¹R²; and,
R⁴, R⁵, R⁶, R⁷ and R⁸ are independently selected from hydrogen, halogen, C₁-C₁₈ alkyl, C₃ to C₁₈ cycloalkyl, C₆-C₁₈ aryl, C₆-C₁₈ aralkyl, C₆-C₁₈-alkylaryl , -CF₃, -NHC(O)NR¹R², C₁-C₁₈ alkyl substituted with -NHC(O)NR¹R², C₃-C₁₈ cycloalkyl substituted with -NHC(O)NR¹R², C₆-C₁₈ aryl substituted with -NHC(O)NR¹R²; C₆-C₁₈ aralkyl substituted with -NHC(O)NR¹R²; and, C₆-C₁₈ aralkyl substituted with -NHC(O)NR¹R².

The substituents (R¹-R⁸) of the urea derivative of Formulae (V) and (VI) should be selected to ensure any said derivative(s) is liquid at room temperature and 1 atmosphere pressure and has a viscosity of less than 1 Pa.s, preferably less than 100 mPa.s at 25°C. Additional to those considerations, it is preferred that the urea derivatives of Formulae (V) and (VI) meet the following conditions:
at least one residue R¹, R², R³ is not hydrogen;
R¹ and R² are independently selected from hydrogen and C₁-C₄ alkyl; and,
R⁴, R⁵, R⁶, R⁷ and R⁸ are independently selected from hydrogen, halogen, C₁-C₄ alkyl and - NHC(O)NR¹R².

A particular preference for the use of N,N-diethylurea, N,N-dipropylurea, N,N-ethyl-methylurea, N,N-dimethylurea, 1,1'-(4-methyl-m-phenylene)-bis-(3,3-dimethylurea) or 1,1'-(2-methyl-m-phenylene)-bis-(3,3-dimethylurea) may be noted.

### Additives and Adjunct Ingredients

The compositions of the present disclosure will typically further comprise adjuvants and additives that can impart improved properties to these compositions. For instance, the adjuvants and additives may impart one or more of: improved elastic properties; improved elastic recovery; longer enabled processing time; faster curing time; and, lower residual tack. Included among such adjuvants and additives are: tougheners; fillers, such as electrically conductive fillers and electrically non-conductive fillers; colorants, such as dyes or pigments; plasticizers; stabilizers including UV stabilizers; antioxidants; reactive diluents; drying agents or moisture scavengers; adhesion promoters; fungicides; flame retardants; rheological adjuvants; and/or optionally also, to a small extent, non-reactive diluents or solvents.

Such adjuvants and additives can be used in such combination and proportions as desired, provided they do not adversely affect the nature and essential properties of the composition. While exceptions may exist in some cases, these adjuvants and additives should not *in toto* comprise more than 20 wt.% of the total composition and preferably should not comprise more than 15 wt.% of the composition.

The presence of tougheners in the curable composition - in an amount up to 10 wt.%, based on the weight of the composition - can, in certain circumstances, be advantageous. Exemplary tougheners may be selected from: epoxy-elastomer adducts; and, toughening rubber in the form of core-shell particles dispersed in the epoxy resin matrix.

Elastomer-containing adducts may be used individually or a combination of two or more particular adducts might be used. Moreover, each adduct may independently be selected from solid adducts or liquid adducts at a temperature of 23°C. Typically, useful adducts will be characterized by a ratio by weight of epoxy to elastomer of from 1:5 to 5:1, for example from 1:3 to 3:1. And an instructive reference regarding suitable epoxy / elastomer adducts is US Patent Publication 2004/0204551. Moreover, exemplary commercial epoxy/elastomer adducts for use herein include but are not limited to: HYPDX RK8-4 commercially available from CVC Chemical; and, B-Tough A3 available from Croda Europe Limited.

The term *"core shell rubber"* or CSR is being employed in accordance with its standard meaning in the art as denoting a rubber particle core formed by a polymer comprising an elastomeric or rubbery polymer as a main ingredient and a shell layer formed by a polymer which is graft polymerized onto the core. The shell layer partially or entirely covers the surface of the rubber particle core in the graft polymerization process. By weight, the core should constitute at least 50 wt.% of the core-shell rubber particle.

The polymeric material of the core should have a glass transition temperature (T_{g}) of no greater than 0⁰C and preferably a glass transition temperature (T_{g}) of -20⁰C or lower, more preferably -40⁰C or lower and even more preferably -60⁰C or lower. The polymer of the shell is non-elastomeric, thermoplastic or thermoset polymer having a glass transition temperature (T_{g}) of greater than room temperature, preferably greater than 30°C and more preferably greater than 50°C.

Without intention to limit the invention, the core may be comprised of: a diene homopolymer, for example, a homopolymer of butadiene or isoprene; a diene copolymer, for example a copolymer of butadiene or isoprene with one or more ethylenically unsaturated monomers, such as vinyl aromatic monomers, (meth)acrylonitrile or (meth)acrylates; polymers based on (meth)acrylic acid ester monomers, such as polybutylacrylate; and, polysiloxane elastomers such as polydimethylsiloxane and crosslinked polydimethylsiloxane.

Similarly without intention to limit the present invention, the shell may be comprised of a polymer or copolymer of one or more monomers selected from: (meth)acrylates, such as methyl methacrylate; vinyl aromatic monomers, such as styrene; vinyl cyanides, such as acrylonitrile; unsaturated acids and anhydrides, such as acrylic acid; and, (meth)acrylamides. The polymer or copolymer used in the shell may possess acid groups that are cross-linked ionically through metal carboxylate formation, in particular through forming salts of divalent metal cations. The shell polymer or copolymer may also be covalently cross-linked by monomers having two or more double bonds per molecule.

It is preferred that any included core-shell rubber particles have an mean volume particle size (Dv50) of from 10nm to 300nm, for example from 50 nm to 250 nm: said particle size refers to the diameter or largest dimension of a particle in a distribution of particles and is measured via laser diffraction. For completeness, the present application does not preclude the presence of two or more types of core shell rubber (CSR) particles with different particle size distributions in the composition to provide a balance of key properties of the resultant cured product, including shear strength, peel strength and resin fracture toughness.

The core-shell rubber may be selected from commercially available products, examples of which include: Zefeic F351, available from Alca Kogyo Ltd.; Paraloid EXL 2650A, EXL 2655 and EXL2691 A, available from The Dow Chemical Company; Clearstrength^{®} XT100, available from Arkema Inc.; the Kane Ace^{®} MX series available from Kaneka Corporation, and in particular MX 120, MX 125, MX 130, MX 136, MX 551, MX553; and, METABLEN SX-006 available from Mitsubishi Rayon.

The composition of the present invention may optionally comprise particulate filler. The composition may, for instance, contain from 0 to 10 wt.% or from 2 to 8 wt.% of filler, based on the weight of the composition.

Broadly, there is no particular intention to limit the shape of the particles employed as fillers: particles that are acicular, spherical, ellipsoidal, cylindrical, bead-like, cubic or platelet-like may be used alone or in combination. Moreover, it is envisaged that agglomerates of more than one particle type may be used. Equally, there is no particular intention to limit the size of the particles employed as fillers. However, such fillers will conventionally have a median volume particle size (Dv50), as measured by laser diffraction, of from 0.1 to 1500 µm, for example from 1 to 1250 µm.

Exemplary fillers which may be included in the present compositions include, but are not limited to, calcium carbonate, calcium oxide, calcium hydroxide (lime powder), precipitated and/or pyrogenic silica, zeolites, bentonites, wollastonite, magnesium carbonate, diatomite, barium sulfate, alumina, clay, talc, titanium oxide, iron oxide, zinc oxide, sand, quartz, flint, mica, glass beads, glass powder, and other ground mineral substances. Organic fillers can also be used, in particular wood fibers, wood flour, sawdust, cellulose, cotton, pulp, cotton, wood chips, chopped straw, chaff, ground walnut shells, and other chopped fibers. Short fibers such as glass fibers, glass filament, polyacrylonitrile, carbon fibers, Kevlar fibers, or polyethylene fibers can also be added.

The pyrogenic and/or precipitated silica advantageously have a BET surface area from 10 to 90 m²/g. When they are used, they do not cause any additional increase in the viscosity of the composition according to the present invention, but do contribute to strengthening the cured composition.

It is likewise conceivable to use pyrogenic and/or precipitated silica having a higher BET surface area, advantageously from 100 to 250 m²/g as a filler: because of the greater BET surface area, the effect of strengthening the cured composition is achieved with a smaller proportion by weight of silica.

Also suitable as fillers are hollow spheres having a mineral shell or a plastic shell. These can be, for example, hollow glass spheres that are obtainable commercially under the trade names Glass Bubbles^{®}. Plastic-based hollow spheres, such as Expancel^{®} or Dualite^{®}, may be used and are described in EP 0 520 426 B1: they are made up of inorganic or organic substances and each have a diameter of 1 mm or less, preferably 500 µm or less.

Fillers which impart thixotropy to the composition may be preferred for many applications: such fillers are also described as rheological adjuvants, e.g. hydrogenated castor oil, fatty acid amides, or swellable plastics such as PVC.

The desired viscosity of the curable composition formed may be determinative of the amount of filler used. Having regard to that latter consideration, the total amount of fillers present in the composition should not prevent the composition from being readily applicable by the elected method of application to the composition to a substrate. For example, compositions of the present invention which are intended to be applicable to a specific locus on a substrate should typically possess a viscosity of from 1000 to 50,000 m.Pas, preferably from 10,000 to 20,000 mPas.

A *"plasticizer"* for the purposes of this disclosure is a substance that decreases the viscosity of the composition and thus facilitates its processability. Herein the plasticizer may constitute up to 10 wt.% or up to 5 wt.%, based on the total weight of the composition, and is preferably selected from the group consisting of: diurethanes; ethers of monofunctional, linear or branched C4-C16 alcohols, such as Cetiol OE (obtainable from Cognis Deutschland GmbH, Düsseldorf); esters of abietic acid, adipic acid, sebacic acid, butyric acid, thiobutyric acid, acetic acid, propionic acid esters and citric acid; esters based on nitrocellulose and polyvinyl acetate; fatty acid esters; dicarboxylic acid esters; esters of OH-group-carrying or epoxidized fatty acids; glycolic acid esters; benzoic acid esters; phosphoric acid esters; sulfonic acid esters; trimellitic acid esters; polyether plasticizers, such as end-capped polyethylene or polypropylene glycols; polystyrene; hydrocarbon plasticizers; chlorinated paraffin; and, mixtures thereof. It is noted that, in principle, phthalic acid esters can be used as the plasticizer but these are not preferred due to their toxicological potential.

*"Stabilizers"* for purposes of this disclosure are to be understood as antioxidants, UV stabilizers, thermal stabilizers or hydrolysis stabilizers. Herein stabilizers may constitute *in toto* up to 10 wt.% or up to 5 wt.%, based on the total weight of the composition. Standard commercial examples of stabilizers suitable for use herein include: sterically hindered phenols; thioethers; benzotriazoles; benzoates; cyanoacrylates; amines of the hindered amine light stabilizer (HALS) type; phosphorus; sulfur; and, mixtures thereof.

It is noted that compounds having metal chelating properties may be used in the compositions of the present disclosure to help enhance the adhesion of the cured adhesive to a substrate surface. Further, also suitable for use as adhesion promoters are the acetoacetate-functionalized modifying resins sold by King Industries under the trade name K-FLEX XM-B301.

The presence of solvents and non-reactive diluents in the compositions of the present disclosure is also not precluded where this can usefully moderate the viscosities thereof. For instance, but for illustration only, the compositions may contain one or more of: xylene; 2-methoxyethanol; dimethoxyethanol; 2-ethoxyethanol; 2-propoxyethanol; 2-isopropoxyethanol; 2-butoxyethanol; 2-phenoxyethanol; 2-benzyloxyethanol; benzyl alcohol; ethylene glycol; ethylene glycol dimethyl ether; ethylene glycol diethyl ether; ethylene glycol dibutyl ether; ethylene glycol diphenyl ether; diethylene glycol; diethylene glycol-monomethyl ether; diethylene glycol-monoethyl ether; diethylene glycol-mono-n-butyl ether; diethylene glycol dimethyl ether; diethylene glycol diethyl ether; diethylene glycoldi-n-butylyl ether; propylene glycol butyl ether; propylene glycol phenyl ether; dipropylene glycol; dipropylene glycol monomethyl ether; dipropylene glycol dimethyl ether; dipropylene glycoldi-n-butyl ether; N-methylpyrrolidone; diphenylmethane; diisopropylnaphthalene; petroleum fractions such as Solvesso^{®} products (available from Exxon); alkylphenols, such as tert-butylphenol, nonylphenol, dodecylphenol and 8,11,14-pentadecatrienylphenol; styrenated phenol; bisphenols; and, aromatic hydrocarbon resins especially those containing phenol groups, such as ethoxylated or propoxylated phenols.

The above aside, it is preferred that said non-reactive diluents and solvent constitute *in toto* less than 10 wt.%, in particular less than 5 wt.% or less than 2 wt.%, based on the total weight of the composition.

### METHODS AND APPLICATIONS

To form the defined curable compositions, the constituents are brought together and mixed. It is important that the mixing homogenously distributes the constituents within the composition: such thorough and effective mixing can be determinative of a homogeneous distribution of any particulate constituent or other adjunct material within the polymer matrix obtained following curing. The mixing conditions should occur under conditions which inhibit or prevent the reactive components from reacting: such conditions would be readily comprehended by the skilled artisan. As such, it will often be preferred that the curative elements are not mixed by hand but are instead mixed by machine - a static or dynamic mixer, for example - in predetermined amounts without intentional heating or photo-irradiation.

The compositions may be thermally cured. Whilst the selection of constituent b) will be determinative, at least in part of the activation temperature of the composition, the temperature required to ensure a desired curing rate may be determined in each individual case by the skilled artisan, using simple preliminary tests if necessary. Without intention to limit the present disclosure, the complete curing of the curable compositions should typically occur at temperatures in the range of from 50°C to 250°C, preferably from 50°C to 200°C, and in particular from 100°C to 200°C. Of course, drying and curing at lower temperatures within the aforementioned ranges is advantageous as it obviates the requirement to substantially heat or cool the mixture from the usually prevailing ambient temperature. Where applicable, however, the temperature of the mixture formed from the respective parts of the composition may be raised above the mixing temperature using conventional means including microwave induction, ovens and drying booth. The elevated temperature may be maintained for up to 60 minutes, such as from 5 to 30 minutes, to ensure complete curing.

The curing of the composition of the present disclosure may, in certain circumstances, be conducted in an oxygen-limited environment: this may done by introducing nitrogen (N₂) gas into the curing environment, for instance. Such an environment is however not essential for the curing of the composition.

By virtue of the inclusion of constituent b) therein, the compositions of the present disclosure are also photocurable. The energy source used to initiate such photocuring of the applied compositions should emit at least one of ultraviolet (UV) radiation, infrared (IR) radiation, visible light, X-rays, gamma rays, or electron beams (e-beam). The photocurable compositions may typically be activated in less than 5 minutes, and commonly between 1 and 60 seconds - for instance between 3 and 12 seconds - when irradiated using commercial curing equipment.

Irradiating ultraviolet light should typically have a wavelength of from 150 to 600 nm and preferably a wavelength of from 200 to 450 nm. Useful sources of UV light include, for instance, extra high pressure mercury lamps, high pressure mercury lamps, medium pressure mercury lamps, low intensity fluorescent lamps, metal halide lamps, microwave powered lamps, xenon lamps, UV-LED lamps and laser beam sources, such as excimer lasers and argon-ion lasers.

Where an e-beam is utilized to cure the applied coating(s), standard parameters for the operating device may be: an accelerating voltage of from 0.1 to 100 keV; a vacuum of from 10 to 10⁻³ Pa; an electron current of from 0.0001 to 1 ampere; and, power of from 0.1 watt to 1 kilowatt.

The amount of radiation necessary to satisfactorily cure an individual composition will depend on a variety of factors including the angle of exposure to the radiation and the thickness of a given surface area of the composition. Broadly, however, a curing dosage of from 5 to 5000 mJ/cm² may be cited as being typical: curing dosages of from 50 to 500 mJ/cm², such as from 50 to 400 mJ/cm² may be considered highly effective.

The purpose of irradiation is to generate the active species from constituent b) which initiates the cure reactions. Once that species is generated, the cure chemistry is subject to the same rules of thermodynamics as any chemical reaction: the reaction rate may be accelerated by heat or retarded by lower temperatures. Without intention to limit the present disclosure, wherein the composition has been purposively irradiated to initiate curing, the complete curing of the compositions should typically occur at temperatures in the range of from 10 to 100°C, preferably from 10 to 50°C. Where applicable, the temperature of the curable compositions may be raised above the mixing temperature and / or the application temperature using conventional means, including microwave induction.

The composition of the present disclosure may find utility in composite materials, wherein the composition is combined with one or more further distinct materials: the composition may, for instance, provide a binding agent for fibers and / or particles of such composite materials. The composition may also find utility as a coating applied to a substrate or as an adhesive which bonds substrate(s) together. For completeness, exemplary substrates to which the composition of the present disclosure may be applied as a coating or as an adhesive include: lignocellulosic materials, such as chipboard, fiber board and paper; mineral building materials, such as lime- and / or cement-bonded plasters, gypsum-containing surfaces, fiber cement building materials and concrete; asphalt- and bitumen-containing pavements; glass; leather and textiles; polymeric substrates, such as polycarbonate (PC), polyethylene (PE), polypropylene (PP), liquid crystal polymer (LCP) polyamides (PA), polyetheretherketone (PEEK), polyetherimide (PEI), polyetherketoneketone (PEKK), polyetherketones (PEK), polyketone (PK), polyethylene terephthalate (PET), polybutylene terephthalate (PBT), polyimides, polyoxymethylene plastic, polyphenylene sulfide (PPS), polyphenylene oxide (PPO), phenylpropanolamine (PPA), polysulphone (PSU), polytetrafluoroethylene (PTFE / Teflon) and poly(methyl methacrylate) (PMMA); ferrous metallic materials, such as iron, stainless steel, cold-rolled steel and electro-galvanized steel; and, non-ferrous metallic materials, such as aluminium, zinc and alloys thereof.

When utilized as a coating or adhesive, the above described composition will commonly be applied to the substrate(s) then cured *in situ.* Priorto applying the composition, it is often advisable to pre-treatthe relevant substrate surfaces to remove foreign matter there from: this step can, if applicable, facilitate the subsequent adhesion of the composition thereto. Such treatments are known in the art and can be performed in a single or multi-stage manner constituted by, for instance, the use of one or more of: an etching treatment with an acid suitable for the substrate and optionally an oxidizing agent; sonication; plasma treatment, including chemical plasma treatment, corona treatment, atmospheric plasma treatment and flame plasma treatment; immersion in a waterborne alkaline degreasing bath; treatment with a waterborne cleaning emulsion; treatment with a cleaning solvent, such as acetone, carbon tetrachloride or trichloroethylene; and, water rinsing, preferably with deionized or demineralized water.

In some embodiments, the adhesion of the composition of the present disclosure to the preferably pre-treated substrate may be facilitated by the application of a primer thereto. Indeed primer compositions may be necessary to ensure efficacious fixture and / or cure times of the compositions on inactive substrates. The skilled artisan will be able to select an appropriate primer.

The composition is then applied to the optionally pre-treated, optionally primed surfaces of the substrate by conventional application methods such as: printing methods, including screen printing; pin transfer; and, syringe application, including by electro-pneumatically controlled syringes. It is recommended that the composition be applied to a surface at a wet film thickness of from 10 to 500 µm. The application of thinner layers within this range is more economical and provides for a reduced likelihood of deleterious thick cured regions. However, great control must be exercised in applying thinner coatings or layers so as to avoid the formation of discontinuous cured films.

The following examples are illustrative of the present disclosure and are not intended to limit the scope of the disclosure in any way.

### EXAMPLES

The following commercial compounds are utilized in the Examples.

| | |
|---|---|
| HCT-1: | Partially acrylated bisphenol-A epoxy resin, available from Henkel Corporation |
| BTTB: | 3,3',4,4'-tetra(t-butyl peroxycarbonate) benzophenone, available from Amadis Chemical Company Limited. |
| Araldite MY721: | N,N,N',N'-tetraglycidyl-4,4'-methylenebisbenzenamine based epoxy resin, available from Huntsman. |
| Amicure^{®} CG-1200G: | Micronized grade of dicyandiamide, available from Evonik Corporation. |
| Amicure^{®} UR2T: | Substituted urea-based cure accelerator, available from Evonik Corporation. |
| Softon 1000: | Calcium carbonate, available from Bihoku Funka Kogyo Ltd. |
| CAB-O-SIL TS720: | Fumed silica, available from Cabot Corporation. |

The remaining compounds of the Examples may be obtained from Sigma Aldrich.

The ingredients listed in Table 1 below were combined and admixed using a Flacktec speed mixer to form a homogenous mixture. For completeness, the given percentages by weight (wt.%) of Table 1 are based on the composition *in toto.*

**Table 1**

| **Ingredient** | **Example 1 (wt.%)** | **Example 2 (wt.%)** |
|---|---|---|
| Trimethylolpropane triacrylate | 14.00 | 10.50 |
| HCT-1 | 54.50 | 40.85 |
| BTTB | 0.50 | 0.40 |
| Araldite MY 721 | 23.00 | 17.25 |
| Amicure CG-1200G | 5.00 | 3.75 |
| Amicure U2RT | 3.00 | 2.25 |
| Zefeic F351 | | 8.00 |
| Softon 1000 | | 16.00 |
| CAB-O-SIL 720 | | 1.00 |

The following procedures and tests were used to evaluate the tabulated compositions:
UV Fixture Time: This parameter is defined as the light exposure time required to develop a shear strength of 0.1 N/mm² for samples of 1g by weight of each composition applied to glass microscope slides. The fixture time (*seconds*) was determined under ultraviolet irradiation (*wavelength: 365 nm*) at 100 mW/cm² from a High Pressure Mercury Lamp.

Glass Transition Temperature: This property of the cured compositions was determined using Differential Scanning Calorimetry (DSC) according to the methodology of Deutsches Institut für Normung (DIN) 11357 after curing under each of the following conditions: **i)** thermal curing at 150°C for 60 minutes; and, **ii)** irradiative curing under ultraviolet irradiation (*wavelength: 365 nm*) for 30 seconds at 100 mW/cm² from a High Pressure Mercury Lamp followed by thermal treatment at 150°C for 60 minutes.

The results of the aforementioned tests are provided in Table 2 below. The results demonstrate that each composition can be cured effectively under thermal curing alone, under irradiative curing alone and under a regime comprising irradiative and thermal curing.

**Table 2**

| **Test** | **Example 1** | **Example 2** |
|---|---|---|
| UV Fixture Time (s) | 5 | 5 |
| Glass Transition Temperature (°C) Curing Condition i) | 132 | 132 |
| Glass Transition Temperature (°C) Curing Condition ii) | 131 | 134 |

In view of the foregoing description and examples, it will be apparent to those skilled in the art that equivalent modifications thereof can be made without departing from the scope of the claims.

## Claims

1. A composition comprising:
a) an ethylenically unsaturated monomer constituent comprising:
a1) at least one epoxy (meth)acrylate monomer, said monomer having at least one (meth)acrylate group and at least one epoxide group; and,
a2) at least one monomer which does not have an epoxide group and which has at least two ethylenically unsaturated groups and a weight average molecular weight (Mw) of at most 600 Daltons;
b) at least one ester peroxide in accordance with Formula P1: 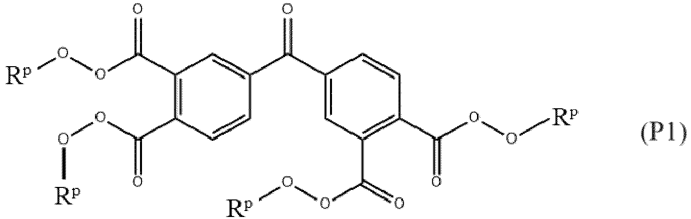 wherein: R^{p} is C₁-C₁₂ alkyl, C₆-C₁₈ aryl, C₇-C₁₈ aralkyl or C₇-C₁₈ alkaryl;
c) at least one polyepoxide compound which does not possess a (meth)acrylate group;
optionally d) at least one monoepoxide compound which does not possess a (meth)acrylate group;
e) a curing agent consisting of one or more compounds which provide at least one epoxide reactive group; and,
f) at least one cure accelerator,
wherein the composition is **characterized in that** the molar ratio of epoxide-reactive groups to epoxide groups is from 0.6:1 to 1.2:1.

2. The composition according to claim 1 comprising, based on the weight of the composition:
from 10 to 80 wt.% of a1) said at least one epoxy (meth)acrylate monomer, said monomer having at least one (meth)acrylate group and at least one epoxide group;
from 5 to 40 wt.% of a2) said at least one monomer which does not have an epoxide group and which has at least two ethylenically unsaturated groups and a weight average molecular weight (Mw) of at most 600 Daltons;
from 0.05 to 5 wt.% of b) said at least one ester peroxide in accordance with Formula P1;
from 5 to 60 wt.% of c) said at least one polyepoxide compound which does not possess a (meth)acrylate group;
from 0 to 5 wt.% of d) said at least one monoepoxide compound which does not possess a (meth)acrylate group;
e) a curing agent consisting of one or more compounds which provide at least one epoxide reactive group; and,
from 0.1 to 10 wt.% of f) said at least one cure accelerator,
wherein the composition is **characterized in that** the molar ratio of epoxide-reactive groups to epoxide groups is from 0.6:1 to 1.2:1.

3. The composition according to claim 1 comprising, based on the weight of the composition:
from 20 to 70 wt.%, preferably from 20 to 60 wt.% of a1) said at least one epoxy (meth)acrylate monomer, said monomer having at least one (meth)acrylate group and at least one epoxide group;
5 to 25 wt.%, preferably from 10 to 25 wt.% of a2) said at least one monomer which does not have an epoxide group and which has at least two ethylenically unsaturated groups and a weight average molecular weight (Mw) of at most 600 Daltons;
from 0.1 to 2 wt.%, preferably from 0.1 to 1 wt.% of b) said at least one ester peroxide in accordance with Formula P1;
from 10 to 50 wt.%, preferably from 10 to 40 wt.% of c) said at least one polyepoxide compound which does not possess a (meth)acrylate group;
from 0 to 3 wt.%, preferably from 0 to 2 wt.% of d) said at least one monoepoxide compound which does not possess a (meth)acrylate group;
e) a curing agent consisting of one or more compounds which provide at least one epoxide reactive group; and,
from 0.1 to 5 wt.%, preferably from 0.5 to 5 wt.% of f) said at least one cure accelerator,
wherein the composition is **characterized in that** the molar ratio of epoxide-reactive groups to epoxide groups is from 0.7:1 to 1:1, preferably from 0.75: 1 to 1:1.

4. The composition according to any one of claims 1 to 3, wherein the or each epoxy (meth)acrylate compound is **characterized by** an equivalent weight of the total of epoxide and (meth)acrylate groups of from 100 to 700 g/eq, preferably from 120 to 320 g/eq.

5. The composition according to any one of claims 1 to 4, wherein constituent a2) comprises or consists of at least one tri(meth)acrylate of a trihydric polyol.

6. The composition according to claim 5, wherein constituent a2) comprises or consists of at least one tri(meth)acrylate of a trihydric polyol.

7. The composition according to claim 6, wherein constituent a2) comprises trimethylolpropane triacrylate (TMPTA) and / or pentaerythritol triacrylate (PETIA).

8. The composition according to any one of claims 1 to 7, wherein in Formula P1, R^{p} is C₁-C₁₂ alkyl, preferably C₃-C₈ alkyl.

9. The composition according to any one of claims 1 to 7, wherein constituent b) comprises or consists of at least one compound chosen from: 3,3',4,4'-tetrakis(t-butyl peroxycarbonyl)benzophenone; 3,3',4,4'-tetrakis(t-amyl peroxycarbonyl)benzophenone; 3,3',4,4'-tetrakis(t-hexyl peroxycarbonyl)benzophenone; 3,3',4,4'-tetrakis(t-octyl peroxycarbonyl)benzophenone; 3,3',4,4'- tetrakis(cumyl peroxycarbonyl)benzophenone; and, mixtures thereof.

10. The composition according to any one of claims 1 to 7, wherein constituent b) comprises or consists of 3,3',4,4'-tetrakis(t-butyl peroxycarbonyl)benzophenone.

11. The composition according to any one of claims 1 to 10, wherein the or each polyepoxide compound has an epoxide equivalent weight of from 100 to 700 g/eq.

12. The composition according to any one of claims 1 to 11, wherein constituent c) comprises or consists of at least one polyglycidyl amine which includes in its structure one or more moieties conforming to:

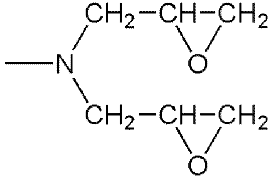

13. The composition according to claim 12, wherein constituent c) comprises or consists of at least one polyglycidyl amine chosen from: N,N-diglycidyl aniline; N,N-diglycidyl-o-toluidine; N,N,O-triglycidyl-m-aminophenol; N,N,O-triglycidyl-p-aminophenol; N,N,O-triglycidyl-4-amino-3-methylphenol; N,N,N',N'-tetraglycidyl-4,4'-methylenebisbenzenamine *(N,N,N',N'-tetraglycidyl-4,4'-methylenedianiliney* N,N,N',N'-tetraglycidyl-2,2'-diethyl-4,4'-methylenedianiline; N,N,N',N'-tetraglycidyl-m-xylylenediamine; and, mixtures thereof.

14. The composition according to any one of claims 1 to 13, wherein constituent e) comprises or consists of dicyandiamide, wherein preferably said dicyandiamide has an median volume particle size (dv50) of from 0.5 to 100 µm.

15. The composition according to any one of claims 1 to 14, wherein constituent f) comprises or consists at least one compound chosen from N,N-diethylurea, N,N-dipropylurea, N,N-ethyl-methylurea, N,N-dimethylurea, 1,1'-(4-methyl-m-phenylene)-bis-(3,3-dimethylurea), 1,1'-(2-methyl-m-phenylene)-bis-(3,3-dimethylurea) and mixtures thereof.

16. A cured product obtained from the composition as defined in any one of claims 1 to 15.

17. Use of the cured product as defined in claim 16 as a coating, adhesive or sealant or as a matrix of a composite material.

18. A method of curing a composition as defined in any one of claims 1 to 15, said method comprising:
i) exposing said composition to actinic radiation, preferably ultraviolet radiation having a wavelength of from 150 to 600 nm, more preferably ultraviolet radiation having a wavelength from 200 to 450 nm; and / or,
ii) heating said composition to a temperature of from 50°C to 250°C, preferably from 50°C to 200°C, more preferably from 100°C to 200°C.

19. The method of claim 18, wherein said composition is exposed to actinic radiation at a dosage of from 5 to 5000 mJ/cm².
